# EUROPEAN PATENT APPLICATION

(11) **EP 4 721 882 A1**
(43) Date of publication of application: **08.04.2026**
(21) Application number: 24814060.0
(22) Date of filing: 26.04.2024
(51) Int. Cl.: B07C 3/00

(54) **ORDER SORTING METHOD AND APPARATUS, AND COMPUTING DEVICE AND STORAGE MEDIUM**

(30) Priority: 02.06.2023 CN 202310651577
(71) Applicant: Beijing Geekplus Technology Co. Ltd, Beijing 100102 (CN)
(72) Inventor: PENG, Feng, Beijing 100102 (CN); CHEN, Wei, Beijing 100102 (CN)
(74) Representative: Manna, Sara
(86) International application number: PCT/CN2024/090077
(87) International publication number: WO 2024/244854

(57) **Abstract**

An order sorting method. The order sorting method is used for a sorting system, and comprises: acquiring a plurality of target orders, destination information of each target order and a compartment weight of each compartment in a sorting area, wherein the compartment weight is inversely proportional to the distance from the compartment to a sorting station; on the basis of the destination information of each target order, compiling statistics on the number of orders of each destination, so as to obtain a destination weight of each destination, wherein the destination weight is proportional to the number of orders; according to each compartment weight and each destination weight, determining a correlation between each compartment and each destination; and according to the correlation, sending a sorting instruction to a sorting robot, so as to drive the sorting robot to respectively sort each target order to the corresponding compartment on the basis of the destination information of each target order. Further comprised are an order sorting apparatus, a computing device and a computer-readable storage medium.

## Description

The present disclosure claims priority to Chinese patent application No. 202310651577.8 filed on June 2, 2023, the entire contents of which are incorporated by reference into the present disclosure.

### TECHNICAL FIELD

The present disclosure relates to the field of intelligent warehousing technology, and specifically to an order sorting method. The present disclosure also relates to an order sorting apparatus, a computing device, and a computer-readable storage medium.

### BACKGROUND

With the development of logistics industry technology, robots are used more and more widely. Scheduling management and task allocation of multiple robots are unavoidable problems in a robot sorting system. In a robot sorting scenario with centralized layout and/or platform layout, sorting compartments are scattered inside the planned site. After an order is assigned to a logistics sorting robot, the sorting system selects any one compartment from the multiple compartments scattered inside the planned site as a destination compartment corresponding to the order, and takes the same approach for other orders.

### SUMMARY

Embodiments of the present disclosure provide an order sorting method, an order sorting apparatus, a computing device, and a storage medium.

According to a first aspect of the embodiments of the present disclosure, an order sorting method is provided. The method is performed by a sorting system and includes: obtaining a plurality of target orders, destination information of each target order, and a compartment weight of each compartment in a sorting area, in which the compartment weight is inversely proportional to a reference distance, and the reference distance is a distance between a compartment and a sorting station; counting the number of orders for each destination based on the destination information of each target order to obtain a destination weight of each destination, in which the destination weight is proportional to the number of orders; determining a correspondence between each compartment and each destination according to the compartment weight of each compartment and the destination weight of each destination; and sending a sorting instruction to a sorting robot according to the correspondence between each compartment and each destination, to drive the sorting robot to sort goods corresponding to each target order to the corresponding compartment based on the destination information of each target order.

According to a second aspect of the embodiments of the present disclosure, an order sorting apparatus is provided. The apparatus is applied in a sorting system and includes: an obtaining module, configured to obtain a plurality of target orders, destination information of each target order, and a compartment weight of each compartment in a sorting area, in which the compartment weight is inversely proportional to a reference distance, and the reference distance is a distance between a compartment and a sorting station; a counting module, configured to count the number of orders for each destination based on the destination information of each target order to obtain a destination weight of each destination, in which the destination weight is proportional to the number of orders; a correspondence determining module, configured to determine a correspondence between each compartment and each destination according to the compartment weight of each compartment and the destination weight of each destination; and a sending module, configured to send a sorting instruction to a sorting robot according to the correspondence between each compartment and each destination, to drive the sorting robot to sort goods corresponding to each target order to the corresponding compartment based on the destination information of each target order.

According to a third aspect of the embodiments of the present disclosure, a computing device is provided, including: a memory and a processor. The memory is configured to store computer-readable instructions. The processor is configured to execute the computer-readable instructions to perform the steps of the order sorting method.

According to a fourth aspect of the embodiments of the present disclosure, a computer-readable storage medium is provided, having computer-executable instructions stored thereon. When the instructions are execute by a processor, the steps of the order sorting method are implemented.

### BRIEF DESCRIPTION OF THE DRAWINGS

FIG. 1A is a schematic diagram of a centralized layout of a robot sorting scenario;
FIG. 1B is a schematic diagram of a platform layout of a robot sorting scenario;
FIG. 2A is a flowchart of an order sorting method according to an embodiment of the present disclosure;
FIG. 2B is a flowchart of an order sorting method according to an embodiment of the present disclosure;
FIG. 2C is a flowchart of an order sorting method according to an embodiment of the present disclosure;
FIG. 2D is a flowchart of an order sorting method according to an embodiment of the present disclosure;
FIG. 3A is a flowchart of an order sorting method according to an embodiment of the present disclosure;
FIG. 3B is a flowchart of an order sorting method according to an embodiment of the present disclosure;
FIG. 4 is a flowchart of an order sorting method according to an embodiment of the present disclosure;
FIG. 5A is a flowchart of an order sorting method according to an embodiment of the present disclosure;
FIG. 5B is a flowchart of an order sorting method according to an embodiment of the present disclosure;
FIG. 6 is a flowchart of an order sorting method according to an embodiment of the present disclosure;
FIG. 7A is a flowchart of an order sorting method according to an embodiment of the present disclosure;
FIG. 7B is a flowchart of an order sorting method according to an embodiment of the present disclosure;
FIG. 7C is a flowchart of an order sorting method according to an embodiment of the present disclosure;
FIG. 8A is a flowchart of an order sorting method according to an embodiment of the present disclosure;
FIG. 8B is a schematic diagram of a logistics sorting area according to an embodiment of the present disclosure;
FIG. 9 is a block diagram of an order sorting apparatus according to an embodiment of the present disclosure; and
FIG. 10 is a block diagram of a computing device according to an embodiment of the present disclosure.

### DETAILED DESCRIPTION

Many specific details are described in the following description to facilitate a full understanding of the present disclosure. However, the present disclosure can be implemented in many other ways than those described herein, and those skilled in the art can make similar generalizations without violating the connotation of the present disclosure, so the present disclosure is not limited by the specific implementations disclosed below.

The terms used in one or more embodiments of the present disclosure are only for the purpose of describing specific embodiments, and are not intended to limit one or more embodiments of the present disclosure. The singular forms of "a", "said" and "the" used in one or more embodiments of the present disclosure and the appended claims are also intended to include plural forms, unless the context clearly indicates other meanings. It should also be understood that the term "and/or" used in one or more embodiments of the present disclosure refers to and includes any or all possible combinations of one or more associated listed items.

It should be understood that although the terms first, second, etc. may be used to describe various information in one or more embodiments of the present disclosure, such information should not be limited to these terms. These terms are only used to distinguish the same type of information from each other. For example, without departing from the scope of one or more embodiments of the present disclosure, the first may also be referred to as the second, and similarly, the second may also be referred to as the first.

First, the terms involved in one or more embodiments of the present disclosure are explained.

Compartment (or container): in a logistics order sorting scenario, the compartment used to sort and store goods corresponding to an order.

Next, the technical solutions in the embodiments of the present disclosure will be described in detail with reference to the accompanying drawings.

With the development of logistics industry technology, robots are used more and more widely in various logistics scenarios in the logistics industry. Scheduling management and task allocation of robots are unavoidable issues in a robot sorting system.

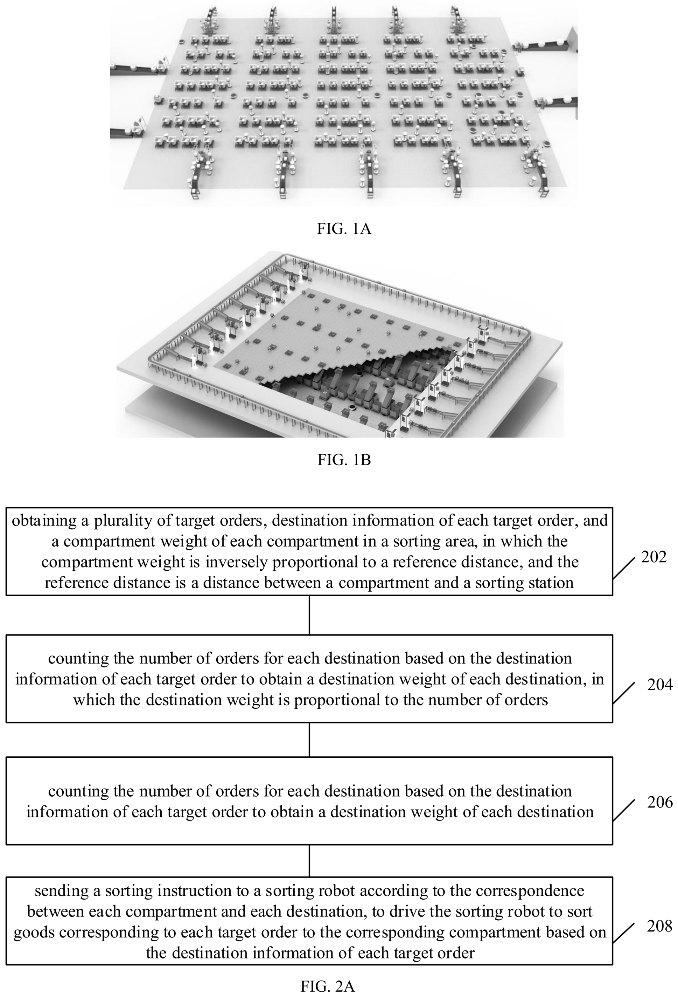

For example, FIG. 1A is a schematic diagram of a centralized layout of a robot sorting scenario, and FIG.1B is a schematic diagram of a platform layout of a robot sorting scenario. In the two logistics robot sorting scenarios shown in FIG. 1A and FIG. 1B, sorting compartments are scattered inside the planned site. After a logistics sorting robot is assigned with an order, the sorting system randomly selects a compartment from multiple compartments scattered inside the planned site as a target compartment of a destination corresponding to the order, and after the sorting robot completes the sorting, the sorting robot is controlled to transport goods corresponding to the order to the target compartment and deliver the goods to the target compartment. The same approach is taken for other orders. However, if the compartment corresponding to the destination is randomly selected in this way. If the selected compartment is far away from the sorting station, a driving distance of the robot may be increased when the robot performs the task to transport the goods corresponding to the order to the compartment. And the robot is prone to conflict with other robots during driving and path congestion may be caused when an order proportion of orders for hotspot destinations is large and if the compartments allocated to the hotspot destinations are far away.

Accordingly, the present disclosure provides an order sorting method applied to a sorting system, which may establish a correspondence between a compartment with a high compartment weight and a destination with a high destination weight based on a destination weight of each destination and a compartment weight of each compartment. The compartment weight is inversely proportional to a distance between the compartment and the sorting station, so that the compartment assigned to the hotspot destination is closer to the sorting station, thereby reducing a travel distance of the robot during the order sorting, making it less likely for the robot to have a path conflict with other robots during driving, and reducing path congestion and path conflict.

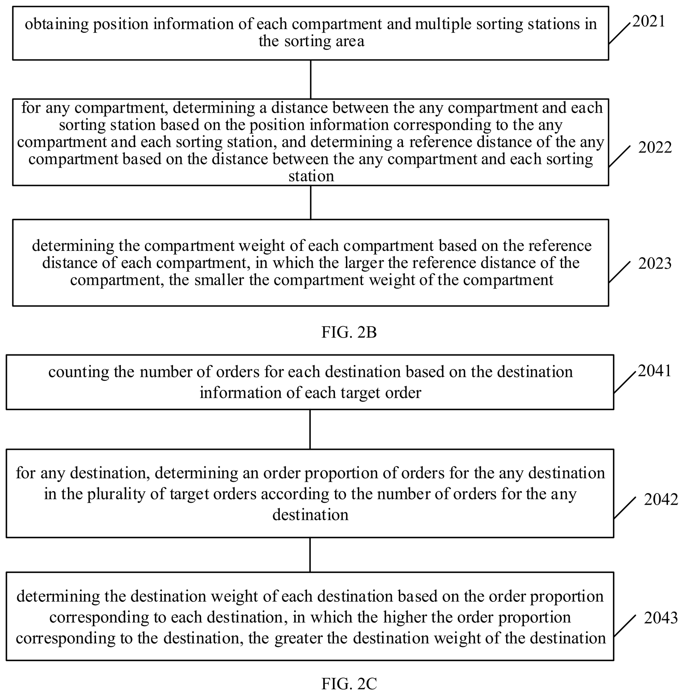

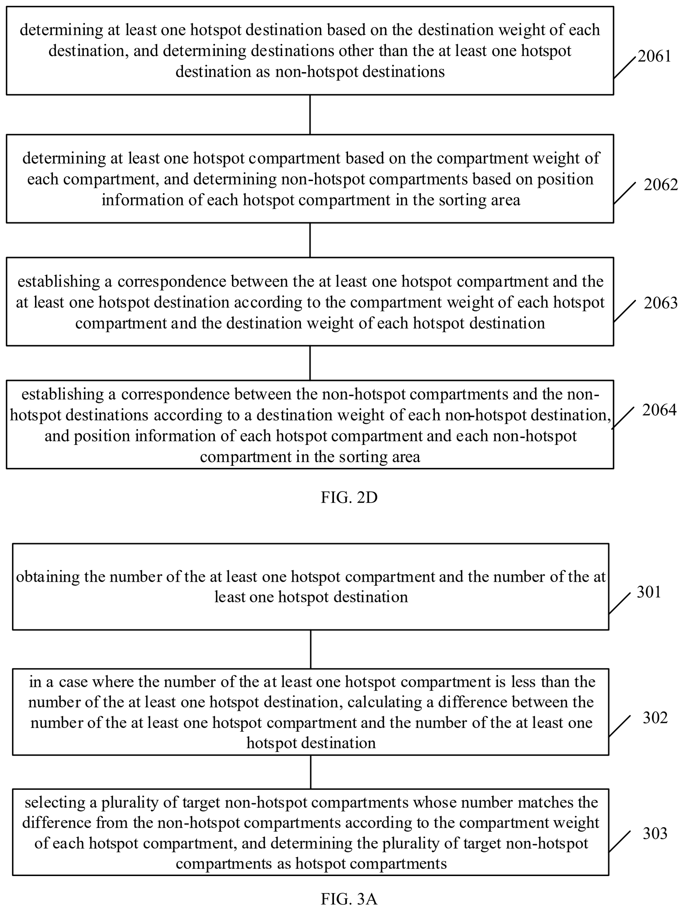

FIG. 2A is a flowchart of an order sorting method provided by an embodiment of the present disclosure. As shown in FIG. 2, the order sorting method in the embodiment includes steps 202-208.

Step 202, a plurality of target orders, destination information of each target order, and a compartment weight of each compartment in a sorting area are obtained, in which the compartment weight is inversely proportional to a reference distance, and the reference distance is a distance between a compartment and a sorting station.

In some embodiments, when there is a need to sort orders and reduce a travel distance of robots when performing sorting tasks, the plurality of target orders, the destination information of each target order, and the compartment weight of each compartment in the sorting area may be obtained.

For example, a method of obtaining the plurality of target orders, the destination information of each target order, and the compartment weight of each compartment may be implemented by a click of a user, so that the sorting system obtains multiple target orders, the destination information of each target order, and the compartment weight of each compartment in the sorting area. Or based on a pre-set obtaining method, the sorting system autonomously obtains multiple target orders, the destination information of each target order, and the compartment weight of each compartment in the sorting area. For example, the sorting system is pre-set to obtain multiple target orders in batches, obtain multiple target orders at time intervals, etc., and the sorting system is pre-set to obtain the destination information of each target order and the compartment weight of each compartment in the sorting area while obtaining multiple target orders.

In some embodiments, the target order refers to an order to be sorted, and the target order is also called a to-be-sorted order. The target order includes destination information corresponding to the target order. The destination information refers to a destination to which the sorted goods need to be delivered after the goods corresponding to the target order are sorted.

For example, target order 1 is from city A to city B. When sorting is performed in an intermediate city C, the destination information of target order 1 is identified as city B.

In some embodiments, the sorting area refers to an area where orders are sorted, and the sorting area includes at least a sorting station and multiple compartments. The compartment weight refers to the popularity of the compartment in the sorting area, in which the compartment weight is inversely proportional to a reference distance of the compartment, that is, the larger the reference distance, the smaller the compartment weight of the compartment. The reference distance refers to a distance between the compartment and the sorting station; when there is one sorting station, the reference distance of each compartment is the distance between the compartment and the sorting station; when there are multiple sorting stations, the reference distance of each compartment is an average distance from the compartment to the multiple sorting stations. The sorting station refers to a station for sorting the goods corresponding to the target order. After establishing the correspondence between the compartment and the destination, the goods corresponding to each target order will be sorted from the sorting station to the compartment corresponding to the destination for the target order according to the correspondence between the compartment and the destination.

In some embodiments, obtaining the plurality of target orders may be implemented in many ways as follows. Orders to be sorted are obtained from an order recording system and the obtained orders to be sorted are used as the target orders. Or the orders to be sorted are manually obtained based on the goods to be sorted, and the orders to be sorted are entered into the sorting system, and the sorting system determines the entered orders to be sorted as the target orders. Obtaining the destination information of each target order may be implemented in many ways as follows. The goods corresponding to each target order are identified, information recorded on a surface of the goods is read, and the destination information of the target order is determined according to the recorded information. Or the sorting system obtains the destination information of each target order from the order recording system when obtaining the plurality of target orders from the order recording system. Obtaining the compartment weight of each compartment in each sorting area may be implemented in many ways as follows. The compartment weight may be obtained from a weight storage library that stores the compartment weight, or may be calculated based on position information of each compartment and the sorting station. An implementation of calculating the compartment weight of each compartment according to the position information of each compartment and the sorting station may be to obtain the reference distance between each compartment and the sorting station according to the position information of each compartment and the sorting station, and then determine the compartment weight of each compartment based on the reference distance, so that the compartment weight is inversely proportional to the reference distance.

It can be understood that by obtaining the plurality of target orders, the destination information of each target order, and the compartment weight of each compartment in the sorting area, a correspondence between each compartment and each target order may be established based on the obtained information, and the target orders may be sorted according to the correspondence.

As shown in FIG. 2B, in some embodiments, obtaining the compartment weight of each compartment in the sorting area includes steps 2021 to 2023.

Step 2021, position information of each compartment and a plurality of sorting stations in a sorting area is obtained.

Step 2022, for any compartment, based on the position information corresponding to any compartment and each sorting station, a distance between any compartment and each sorting station is determined, and based on the distance between any compartment and each sorting station, a reference distance of any compartment is determined.

Step 2023, based on the reference distance of each compartment, the compartment weight of each compartment is determined; the larger the reference distance of the compartment, the smaller the compartment weight.

For example, the position information refers to a position in the sorting area; for example, the position information of the compartment refers to a position of the compartment in the sorting area, and the position information of the sorting station refers to a position of the sorting station in the sorting area. The position information can be expressed in the form of distance, for example, compartment 1 is 3 meters away from the sorting station on the left side and 5 meters away from the sorting station on the upper side. The position information can also be expressed in the form of coordinates, for example, taking a lower left corner of the sorting area as the origin, the X-axis and Y-axis are established, and the coordinates of each compartment and the sorting station are determined.

In some embodiments, the position information of each compartment and multiple sorting stations in the sorting area may be obtained by acquiring it from a pre-stored position information repository, or by performing position measurement based on the current sorting area and determining a measurement result as the position information.

In some embodiments, the distance between any compartment and each sorting station is determined based on the position information of any compartment and multiple sorting stations by following way: using the Manhattan distance to calculate the distance between any compartment and each sorting station, or calculating the distance between any compartment and each sorting station using A* distance.

In some embodiments, determining the reference distance of any compartment based on the distance may be implemented in many ways as follows. The distances are summed up and the summed distance is determined as the reference distance of any compartment. Or the distances are summed up and then averaged to obtain the reference distance of any compartment. Or a weight corresponding to each distance is determined, and then the distances are weighted and averaged based on the weight to obtain the reference distance of any compartment.

In some embodiments, the compartment weight of each compartment may be determined based on the reference distance of each compartment by using the reciprocal of the reference distance as the compartment weight of each compartment.

It can be understood that the position information of each compartment and multiple sorting stations in the sorting area is obtained; for any compartment, the distance between the compartment and the sorting station is determined; the reference distance corresponding to the compartment is determined based on the distance, and the compartment weight that is inversely proportional to the reference distance is determined. In this way, the distance is calculated through the position information, and the weight is determined according to the distance, so that the subsequent establishment of the correspondence between the compartment and the destination according to the compartment weight is to establish the correspondence between the compartment and the destination according to the distance of the compartment, that is, when the correspondence is established, it is established based on the distance of the compartment, which reduces a driving distance of the robot when transporting the sorted goods to the compartment corresponding to the destination, that is, reducing the driving distance of the robot when sorting orders.

Step 204, the number of orders for each destination is counted based on the destination information of each target order to obtain a destination weight of each destination, in which the destination weight is proportional to the number of orders.

For example, the number of orders refers to the number of target orders for the same destination. For example, if there are 10 target orders, and 3 target orders of the 10 target orders have a destination of A, 5 target orders have a destination of B, and 2 target orders have a destination of C, then the number of orders for destination A is determined to be 3, the number of orders for destination B is 5, and the number of orders for destination C is 2. The destination weight refers to the popularity of a destination among multiple target orders, where the popularity is proportional to the number of orders for the destination, that is, the more orders there are, the greater the corresponding destination weight.

In some embodiments, based on the destination information of each target order, the number of orders for each destination is counted to obtain the destination weight of each destination as follows. The number of orders for each destination is counted based on the destination information of each target order, to obtain the order proportion of orders for each destination in multiple target orders, and the destination weight of each destination is determined based on the order proportion. Or the number of orders for each destination is counted based on the destination information of each target order, and the destination weight of each destination is determined based on the number of orders.

An implementation of determining the destination weight of each destination based on the number of orders may be to determine the number of orders as the destination weight of each destination.

As shown in FIG. 2C, in some embodiments, counting the number of orders for each destination based on the destination information of each target order to obtain the destination weight of each destination includes steps 2041 to 2043.

Step 2041, the number of orders for each destination is counted based on the destination information of each target order.

Step 2042, for any destination, an order proportion of orders for any destination in multiple target orders is determined based on the number of orders for any destination.

Step 2043, the destination weight of each destination is determined based on the order proportion corresponding to each destination, in which the higher the order proportion corresponding to the destination, the greater the destination weight of the destination.

For example, the order proportion (p_i) refers to a proportion of target orders corresponding to the destination among the multiple target orders. For example, the total number of target orders is 10, and there are 3 target orders for destination A, then the order proportion for destination A is determined to be 3/10.

In some embodiments, the implementation of counting the number of orders for each destination based on the destination information of each target order may be to classify the orders according to different destinations based on the destination information of each target order, count the number of orders in each classification, and obtain the number of orders for each destination.

In some embodiments, the implementation of determining the order proportion of orders for any destination in multiple target orders based on the number of orders for any destination may be to divide the number of orders for any destination by the number of multiple target orders and determine a result as the order proportion of orders for any destination in multiple target orders.

In some embodiments, the implementation of determining the destination weight of each destination based on the order proportion corresponding to each destination may be to determine the order proportion corresponding to each destination as the destination weight of each destination; or to obtain a benchmark value, multiply the order proportion corresponding to each destination by the benchmark value, and determine a result of the multiplication as the destination weight of each destination, in which the benchmark value may be a randomly selected value greater than 0.

It can be understood that based on the destination information of each target order, the number of orders for each destination is counted to obtain the order proportion of orders for each destination in multiple target orders. Afterwards, the destination weight of each destination is determined based on the order proportion, so that the destination weight is determined based on the number of orders corresponding to each destination, then the correspondence between the destination and the compartment established subsequently based on the weight is also determined based on the number of orders corresponding to the destination. In this way, the number of orders corresponding to the destination is taken into account when establishing the correspondence between the compartment and the destination, thereby improving the efficiency of subsequent order sorting based on the correspondence.

Step 206, a correspondence between each compartment and each destination is determined according to the compartment weight of each compartment and the destination weight of each destination.

In some embodiments, the correspondence is used to instruct the robot to sort the goods corresponding to the target order to the corresponding compartment. The correspondence between each compartment and each destination determined according to the compartment weight of each compartment and the destination weight of each destination may be a one-to-one correspondence, or a many-to-one or one-to-many correspondence, which is not limited to the present disclosure.

For example, each destination may establish a correspondence with one compartment, or may establish a correspondence with multiple compartments. For example, destination 1 may establish a correspondence with compartment 1, and after the target order corresponding to destination 1 is sorted, the robot may transport the goods corresponding to the target order to compartment 1; destination 1 may also establish a correspondence with compartment 1 and compartment 2, and after the target order corresponding to destination 1 is sorted, the robot may transport the goods corresponding to the target order to compartment 1 or compartment 2. It should be noted that if the number of goods corresponding to the target order is large and one compartment cannot hold all the goods corresponding to the target order, the robot may transport the goods corresponding to the target order to compartment 1 and place part of the goods in compartment 1 (compartment 2), and then transport the remaining goods to compartment 2 and place the remaining goods in compartment 2 (compartment 1).

In some embodiments, the implementation of determining the correspondence between each compartment and each destination according to the compartment weight of each compartment and the destination weight of each destination may be to classify compartments into hotspot compartments and non-hotspot compartments according to the compartment weight of each compartment and the position information of each compartment, and classify destinations into hotspot destinations and non-hotspot destinations according to the destination weight of each destination and a preset threshold, and then determine the correspondence between the hotspot compartment and the hotspot destination, as well as the correspondence between the non-hotspot compartment and the non-hotspot destination; may be to establish the correspondence between each compartment and each destination in sequence according to a descending order of the compartment weight of each compartment and the destination weight of each destination.

As shown in FIG. 2D, in some embodiments, determining the correspondence between each compartment and each destination according to the compartment weight of each compartment and the destination weight of each destination includes steps 2061 to 2064.

Step 2061, at least one hotspot destination is determined based on the destination weight of each destination, and destinations other than the hotspot destination(s) are determined as non-hotspot destinations, in which the destination weight of each hotspot destination is greater than a first threshold.

Step 2062, at least one hotspot compartment is determined based on the compartment weight of each compartment, and non-hotspot compartments are determined based on position information of each hotspot compartment in the sorting area, in which the compartment weight of each hotspot compartment is greater than a second threshold, and the non-hotspot compartments include compartments within the neighborhood(s) of the hotspot compartment(s) except the hotspot compartment(s).

Step 2063, a correspondence between the hotspot compartment(s) and the hotspot destination(s) is established based on the compartment weight of each hotspot compartment and the destination weight of each hotspot destination.

Step 2064, a correspondence between the non-hotspot compartments and the non-hotspot destinations is established based on the destination weight of each non-hotspot destination, and the position information of each hotspot compartment and each non-hotspot compartment in the sorting area, in which the correspondence between each compartment and each destination includes the correspondence between the non-hotspot compartments and the non-hotspot destinations and the correspondence between the hotspot compartment(s) and the hotspot destination(s).

In some embodiments, the hotspot destination refers to a destination whose destination weight is greater than the first threshold, and the number of orders for the hotspot destination is greater than the number of orders for a non-hotspot destination. The non-hotspot destination refers to a destination whose destination weight is less than or equal to the first threshold, and the number of orders for the non-hotspot destination is less than the number of orders for the hotspot destination. The first threshold refers to a pre-set threshold for distinguishing whether a destination is a hotspot destination or a non-hotspot destination. The first threshold may be set based on multiple target orders currently to be sorted, or may be pre-set according to a range of the sorting area, or may be set by comprehensively considering the number of multiple target orders, the range of the sorting area, and the number of compartments in the sorting area, which is not limited to the embodiments of the present disclosure.

In some embodiments, the hotspot compartment refers to a compartment whose compartment weight is greater than the second threshold in the sorting area, and the reference distance of the hotspot compartment is closer than the reference distance of the non-hotspot compartment. The non-hotspot compartment refers to a compartment other than the hotspot compartment in the sorting area, and the reference distance of the non-hotspot compartment is farther than the reference distance of the hotspot compartment. The second threshold refers to a pre-set threshold for distinguishing the hotspot compartment and the non-hotspot compartment. The second threshold may be set based on a range of the sorting area, may be determined based on the number of compartments, or may be set by comprehensively considering positions of the compartments in the sorting area, the number of compartments, and the range of the sorting area.

In some embodiments, an implementation of determining at least one hotspot destination based on the destination weight of each destination, and determining destinations other than the hotspot destination(s) are determined as non-hotspot destinations may be to compare the destination weight of each destination with the first threshold, determine the destination corresponding to the destination weight greater than the first threshold as a hotspot destination, and determine the destination other than the hotspot destination as a non-hotspot destination.

In some embodiments, before determining the compartment corresponding to the compartment weight greater than the second threshold as the hotspot compartment, it is further judged whether a distance between the hotspot compartments corresponding to the compartment weights greater than the second threshold is greater than the neighborhood range, if not, one of the hotspot compartments is determined as a to-be-determined hotspot compartment, and the distance between other hotspot compartments corresponding to the compartment weights greater than the second threshold is continued to be judged until all the hotspot compartments corresponding to the compartment weights greater than the second threshold within the sorting area are judged. In this case, if the number of hotspot compartments is insufficient, a hotspot compartment is selected from the to-be-determined hotspot compartments.

In some embodiments, an implementation of determining at least one hotspot compartment based on the compartment weight of each compartment, and determining the non-hotspot compartments based on the position information of each hotspot compartment in the sorting area may be to compare the compartment weight of each compartment with the second threshold, determine the compartment corresponding to the compartment weight greater than the second threshold as a hotspot compartment, determine the compartment other than the hotspot compartment as a non-hotspot compartment, and determine the correspondence between the hotspot compartment and the non-hotspot compartment based on the position information of the hotspot compartment and the non-hotspot compartment.

In some embodiments, an implementation of establishing the correspondence between the hotspot compartment and the hotspot destination based on the compartment weight of each hotspot compartment and the destination weight of each hotspot destination may be to establish the correspondence between each hotspot compartment and each hotspot destination in sequence based on the compartment weight of each hotspot compartment and the destination weight of each hotspot destination; or may be to establish the correspondence between each hotspot compartment and each hotspot destination in sequence based on the compartment weight of each hotspot compartment and the destination weight of each hotspot destination.

In some embodiments, an implementation of establishing the correspondence between the non-hotspot compartments and the non-hotspot destinations based on the destination weight of each non-hotspot destination, the position information of each hotspot compartment and each non-hotspot compartment in the sorting area may be to determine a first reference hotspot compartment corresponding to each non-hotspot destination according to an ascending order of the destination weight of each non-hotspot destination and a descending order of the hotspot compartments, and determine a target non-hotspot compartment corresponding to the first reference hotspot compartment within a neighborhood of the first reference hotspot compartment based on the position information of the first reference hotspot compartment in the sorting area and the position information of each non-hotspot compartment in the sorting area, and establish the correspondence between each non-hotspot destination and each target non-hotspot compartment.

It can be understood that the compartments are classified into hotspot compartments and non-hotspot compartments, and the destinations are classified into hotspot destinations and non-hotspot destinations. By establishing a correspondence between hotspot compartments and hotspot destinations and a correspondence between non-hotspot compartments and non-hotspot destinations, a correspondence may be established between compartments with relatively close reference distances and destinations with relatively large numbers of orders, and a correspondence may be established between compartments with relatively long reference distances and destinations with relatively small numbers of orders, thereby reducing a travel distance of the robot during the order sorting, making it less likely for the robot to have path conflicts with other robots during driving, and reducing path congestion and path conflicts.

In some embodiments, establishing the correspondence between hotspot compartments and hotspot destinations based on the compartment weight of each hotspot compartment and the destination weight of each hotspot destination includes: establishing a correspondence between each hotspot compartment and each hotspot destination in sequence according to a descending order of the compartment weight of each hotspot compartment and the destination weight of each hotspot destination.

For example, there are many implementations for establishing the correspondence between each hotspot compartment and each hotspot destination according to the descending order the compartment weight of each hotspot compartment and the destination weight of each hotspot destination, which may be determined based on actual conditions and not limited in the present disclosure.

In a possible implementation of the present disclosure, the hotspot compartments may be arranged in a descending order of the compartment weights of the hotspot compartments to obtain a first positive order result, and the hotspot destinations may be arranged in a descending order of the destination weights of the hotspot destinations to obtain a second positive order result. The first positive order result and the second positive order result may be matched, and a correspondence may be established based on the matching result. For example, the matching result may include that the hotspot compartment with the largest compartment weight corresponds to the hotspot destination with the largest destination weight, and a correspondence may be established between the hotspot compartment with the largest compartment weight and the hotspot destination with the largest destination weight, and so on, so that a correspondence between each hotspot compartment and each hotspot destination is established.

In another possible implementation of the present disclosure, the hotspot compartment with the largest compartment weight is selected from the hotspot compartments as a first hotspot compartment based on the compartment weight of each hotspot compartment, the hotspot destination with the largest destination weight is selected from the hotspot destinations as a first hotspot destination based on the destination weight of each hotspot destination, and a correspondence between the first hotspot compartment and the first hotspot destination is established; the hotspot compartment with the second largest compartment weight is selected from the hotspot compartments as a second hotspot compartment based on the compartment weight of each hotspot compartment, the hotspot destination with the second largest destination weight is selected from the hotspot destinations as a second hotspot destination based on the destination weight of each hotspot destination, and a correspondence between the second hotspot compartment and the second hotspot destination is established, and so on, so that a correspondence between each hotspot compartment and each hotspot destination is established.

It can be understood that the correspondence between each hotspot compartment and each hotspot destination is established in sequence according to the descending order of the compartment weight of each hotspot compartment and the destination weight of each hotspot destination, so that the correspondence between the hotspot compartment and the hotspot destination is established according to the descending order, thus ensuring the correspondence between the compartment and the popularity of the destination, and reducing the travel distance of the sorting robot when sorting orders according to the correspondence.

As shown in FIG. 3A, in some embodiments, before establishing the correspondence between hotspot compartments and hotspot destinations based on the compartment weight of each hotspot compartment and the destination weight of each hotspot destination, the order sorting method provided by the present disclosure further includes steps 301 to 303.

Step 301, the number of hotspot compartments and the number of hotspot destinations are obtained.

Step 302, in a case where the number of hotspot compartments is less than the number of hotspot destinations, a difference between the number of hotspot compartments and the number of hotspot destinations is calculated.

Step 303, according to compartment weights of the hotspot compartments, a plurality of target non-hotspot compartments whose number matches the difference are selected from the non-hotspot compartments, and the plurality of target non-hotspot compartments are determined as hotspot compartments.

In some embodiments, the number of hotspot compartments and the number of hotspot destinations are obtained. If the number of hotspot destinations is greater than the number of hotspot compartments, compartments are selected from non-hotspot compartments as hotspot compartments to supplement the hotspot compartments, so that the number of hotspot compartments is equal to the number of hotspot destinations. The embodiments of the present disclosure are used to sort target orders. In order to ensure the efficiency of sorting target orders and reduce the path conflicts when the sorting robot sorts orders, it is required to ensure that the hotspot destination corresponds to at least one compartment separately. Therefore, when the number of hotspot destinations is higher than the number of hotspot compartments, the number of hotspot compartments needs to be increased.

In some embodiments, when the number of hotspot compartments is less than the number of hotspot destinations, before calculating the difference between the number of hotspot compartments and the number of hotspot destinations, the method also includes determining the size relationship of the number of hotspot compartments and the number of hotspot destinations.

In some embodiments, when the number of hotspot compartments is less than the number of hotspot destinations, the difference between the number of hotspot compartments and the number of hotspot destinations may be calculated by subtracting the number of hotspot compartments from the number of hotspot destinations.

In some embodiments, an implementation of selecting multiple target non-hotspot compartments whose number matches the difference from the non-hotspot compartments and determining the multiple target non-hotspot compartments as hotspot compartments may be to select multiple target non-hotspot compartments whose number matches the difference from the non-hotspot compartments based on the compartment weights of the non-hotspot compartments, and determine the multiple target non-hotspot compartments as hotspot compartments.

It can be understood that the number of hotspot compartments and the number of hotspot destinations are obtained. When the number of hotspot compartments is less than the number of hotspot destinations, the difference between the number of hotspot compartments and the number of hotspot destinations is calculated, and the target non-hotspot compartments whose number matches the difference are selected from the non-hotspot compartments as hotspot compartments, so that when the correspondence is established subsequently, each hotspot destination may establish a correspondence with at least one hotspot compartment. In this way, when order sorting is performed according to the correspondence, a driving distance of the robot during the order sorting can be reduced.

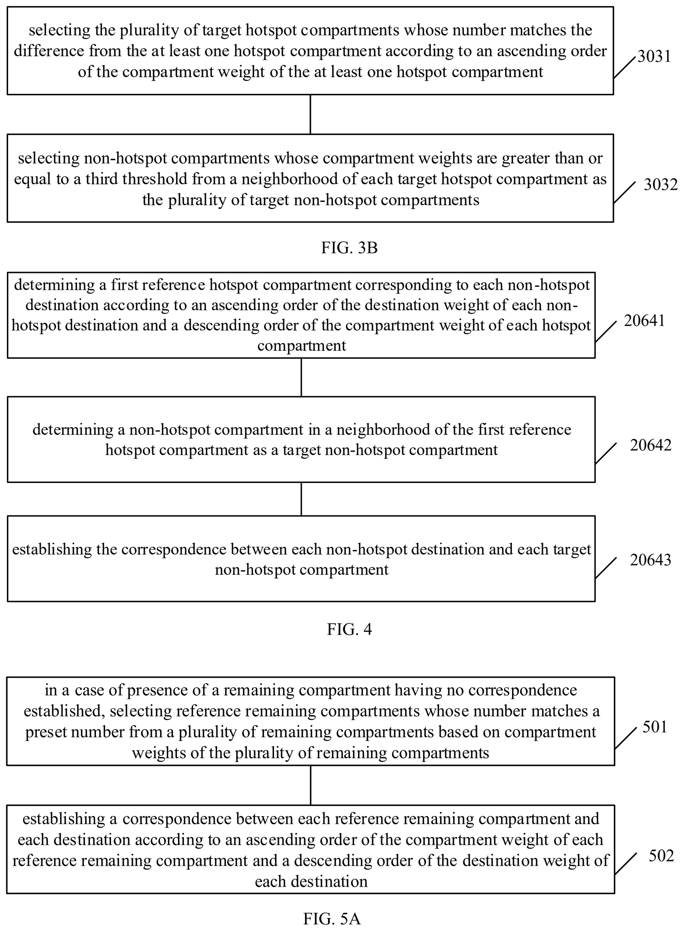

As shown in FIG. 3B, in some embodiments, selecting the plurality of target non-hotspot compartments whose number matches the difference between the number of hotspot compartments and the number of hotspot destinations from the non-hotspot compartments includes steps 3031 and 3032.

Step 3031, multiple target hotspot compartments whose number matches the difference are selected from respective hotspot compartments according to an ascending order of compartment weight of each hotspot compartment.

Step 3032, non-hotspot compartments whose compartment weights are greater than or equal to a third threshold from a neighborhood of each target hotspot compartment as target non-hotspot compartments.

For example, the neighborhood refers to a pre-set range for limiting the non-hotspot compartments corresponding to the hotspot compartment, for example, the neighborhood can be 1 or 2. If the neighborhood is 1, then 1 can indicate that the number of non-hotspot compartments in all directions around the hotspot compartment is 1, or 1 can indicate that the compartments with a distance of less than 1 meter from the hotspot compartment are non-hotspot compartments. The size of the neighborhood is determined according to the size of the actual sorting area, and the present disclosure does not limit thereto.

In some embodiments, an implementation of selecting multiple target hotspot compartments whose number matches the difference from respective hotspot compartments according to the ascending order of the compartment weights of respective hotspot compartments may be to arrange the compartment weights of respective hotspot compartments in the ascending order, and select the hotspot compartments whose number matches the difference as the target hotspot compartments.

In some embodiments, an implementation of selecting the non-hotspot compartments whose compartment weights reach a third threshold from a neighborhood of each target hotspot compartment may be to arrange the target hotspot compartments in an ascending order of the compartment weights, and then select the non-hotspot compartments whose compartment weights reach the third threshold from the neighborhood of each arranged target hotspot compartment.

In some embodiments, an implementation of updating a selected non-hotspot compartment to a hotspot compartment may be to switch the type of each selected non-hotspot compartment from the non-hotspot compartment to the hotspot compartment.

For example, when the difference between the number of hotspot compartments and the number of hotspot destinations is 2, and five hotspot compartments are arranged according to the ascending order of the compartment weights: A, B, C, D, E, hotspot compartment A and hotspot compartment B are selected as target hotspot compartments. A non-hotspot compartment whose compartment weight reaches the third threshold is selected from the neighborhood of hotspot compartment A and hotspot compartment B respectively, and the selected non-hotspot compartments are updated to hotspot compartments.

It can be understood that, according to the ascending order of the compartment weight of each hotspot compartment, multiple target hotspot compartments whose number matches the difference are selected from the hotspot compartments, and compartments with compartment weights greater than the threshold are selected from the neighborhood of the target hotspot compartments and updated as hotspot compartments. By completing the step of supplementing the hotspot compartments, there is at least one hotspot compartment corresponding to the hotspot destination, which reduces the driving distance of sorting robots when subsequently sorting orders based on the correspondence.

As shown in FIG. 4, in some embodiments, establishing the correspondence between non-hotspot compartments and non-hotspot destinations based on the destination weight of each non-hotspot destination, and the position information of each hotspot compartment and each non-hotspot compartment in the sorting area, includes steps 20641 to 20643.

Step 20641, a first reference hotspot compartment corresponding to each non-hotspot destination is determined according to an ascending order of the destination weight of each non-hotspot destination and a descending order of the compartment weight of each hotspot compartment.

Step 20642, a non-hotspot compartment within a neighborhood of the first reference hotspot compartment is determined as a target non-hotspot compartment.

Step 20643, a correspondence between each non-hotspot destination and each target non-hotspot compartment is established.

For example, the first reference hotspot compartment refers to a hotspot compartment corresponding to a non-hotspot destination and within a neighborhood of which a non-hotspot compartment may be selected.

In some embodiments, there are many implementations for determining the first reference hotspot compartment corresponding to each non-hotspot destination according to the ascending order of the destination weight of each non-hotspot destination and the descending order of the hotspot compartment, which may be determined based on actual conditions and not limited in the present disclosure.

In a possible implementation of the present disclosure, non-hotspot destinations may be arranged in an ascending order of the destination weight of each non-hotspot destination to obtain a first reverse order result; the hotspot compartments may be arranged in a descending order of the compartment weight of each hotspot compartment to obtain a third positive order result; and the first reference hotspot compartment corresponding to each non-hotspot destination may be determined based on the first reverse order result and the third positive order result.

In another possible implementation of the present disclosure, based on the destination weight of each non-hotspot destination, a non-hotspot destination with the smallest destination weight is selected from the non-hotspot destinations as the first non-hotspot destination; based on the compartment weight of each hotspot compartment, a hotspot compartment with the largest compartment weight is selected from the hotspot compartments as the first hotspot compartment, and the first hotspot compartment is determined as the first reference hotspot compartment for the first non-hotspot destination; based on the destination weight of each non-hotspot destination, a non-hotspot destination with the second smallest destination weight is selected from the non-hotspot destinations as the second non-hotspot destination; based on the compartment weight of each hotspot compartment, a hotspot compartment with the second largest compartment weight is selected from the hotspot compartments as the second hotspot compartment, and the second hotspot compartment is determined as the first reference hotspot compartment for the second non-hotspot destination, and so on, so that the first reference hotspot compartment corresponding to each non-hotspot destination is determined.

**In** another possible implementation of the present disclosure, based on the compartment weight of each hotspot compartment, the hotspot compartment with the largest compartment weight is selected from the hotspot compartments as the first hotspot compartment, and the first number of non-hotspot compartments within the neighborhood of the first hotspot compartment is obtained; based on the ascending order of the destination weight of each non-hotspot destination, non-hotspot destinations that match the first number are selected from the non-hotspot destinations as the first non-hotspot destinations; and the first hotspot compartment is used as the first reference hotspot compartment corresponding to the first non-hotspot destinations.

In some embodiments, an implementation of determining the target non-hotspot compartment corresponding to the first reference hotspot compartment from the neighborhood of the first reference hotspot compartment based on the position information of the first reference hotspot compartment in the sorting area and the position information of each non-hotspot compartment in the sorting area may be to determine the non-hotspot compartments within the neighborhood of the first reference hotspot compartment based on the position information of the first reference hotspot compartment in the sorting area and the position information of each non-hotspot compartment in the sorting area, and select the target non-hotspot compartment corresponding to the first reference hotspot compartment from non-hotspot compartments.

It can be understood that the first reference hotspot compartment corresponding to each non-hotspot destination is determined according to the ascending order of the destination weight of each non-hotspot destination and the descending order of each hotspot compartment. According to the position information, the target non-hotspot compartment corresponding to the first reference hotspot compartment is determined, and a correspondence between the target non-hotspot compartment and the target non-hotspot destination is established, so that a destination with a lower destination weight is established with a compartment with a higher compartment weight. In this way, the compartment corresponding to the hotspot destination may be separated from the compartment corresponding to the hotspot destination, thereby ensuring the path balance of the sorting robots in subsequent sorting, reducing the path conflict of the sorting robot when performing sorting, and improving the efficiency of order sorting.

As shown in FIG. 5A, in some embodiments, after establishing the correspondence between hotspot compartments and hotspot destinations and the correspondence between non-hotspot compartments and non-hotspot destinations, the order sorting method provided by the present disclosure includes steps 501 and 502.

Step 501, in a case where there are remaining compartments having no correspondence established, based on a compartment weight of each remaining compartment, reference remaining compartments whose number matches a preset number are selected from a plurality of remaining compartments.

Step 502, a correspondence between each reference remaining compartment and each destination is established according to an ascending order of the compartment weight of each reference remaining compartment and a descending order of the destination weight of each destination.

In some embodiments, the remaining compartment refers to a compartment having no correspondence established after the correspondence described in the above embodiments is established. The reference remaining compartments refer to a remaining compartment whose compartment weight meets a preset condition. The preset number is a preset value, and the preset number can be equal to the number of hotspot destinations.

For example, an implementation of selecting the reference remaining compartments whose number matches the preset number from the plurality of remaining compartments based on the compartment weight of each remaining compartments can be to arrange the plurality of remaining compartments in a descending order of the compartment weights and select the reference remaining compartments whose number matches the preset number from the plurality of arranged remaining compartments; or to select the reference remaining compartments whose number matches the preset number from the remaining compartments whose compartment weights are greater than a preset threshold. The embodiments of the present disclosure are not limited thereto.

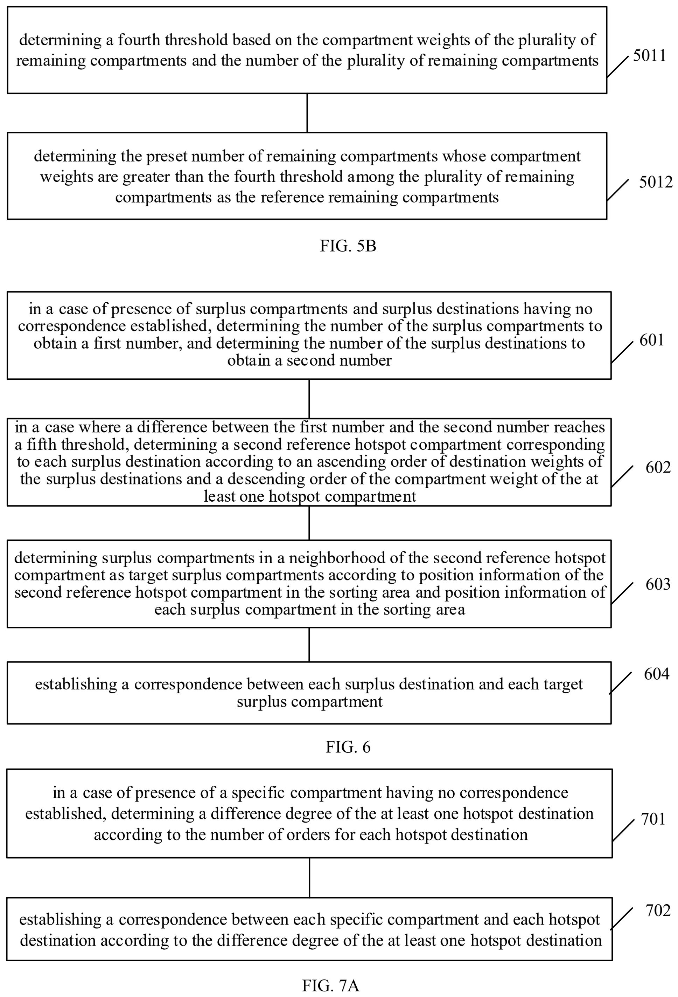

As shown in FIG. 5B, in some embodiments, selecting the reference remaining compartments whose number matches the preset number from a plurality of remaining compartments based on the compartment weight of each remaining compartment includes steps 5011 and 5012.

Step 5011, a fourth threshold is determined based on the compartment weights of the remaining compartments and the number of the remaining compartments.

Step 5012, a preset number of remaining compartments whose compartment weights are greater than the fourth threshold among the plurality of remaining compartments are determined as reference remaining compartments.

For example, the fourth threshold refers to a preset threshold for determining the reference remaining compartments by screening the compartment weights, and the fourth threshold is determined based on the number of hotspot destinations and the number of compartments.

In some embodiments, the fourth threshold may be set by adding the compartment weights of multiple remaining compartments to obtain a sum of the compartment weights of the remaining compartments, dividing the sum of the compartment weights of the remaining compartments by the number of the remaining compartments to obtain an average compartment weight of the remaining compartments, and determining the average compartment weight of the remaining compartments as the fourth threshold. Alternatively, the fourth threshold may be set by obtaining the target number of hotspot destinations and a target difference between the number of compartments and the number of hotspot destinations, selecting the smaller one from the target number and the target difference as the selected number N, the remaining compartments are arranged in a descending order of the compartment weights, and determining the compartment weight of the N-th remaining compartment from the arranged remaining compartments as the fourth threshold.

For example, if the number of hotspot destinations is min(m, p-m), and the average compartment weight of the remaining compartments is determined as the fourth threshold, then when selecting reference remaining compartments whose number matches the preset number from the multiple remaining compartments, the first min(m, p-m) remaining compartments whose compartment weights are greater than the average compartment weight among the multiple remaining compartments can be determined as the reference remaining compartments.

**In** some embodiments, an implementation of selecting the reference remaining compartments whose compartment weights are greater than the fourth threshold from the remaining compartments can be to compare the compartment weights of the remaining compartments with the fourth threshold, and determine the compartments corresponding to the compartment weights greater than the fourth threshold as the reference remaining compartments.

In some embodiments, there are many implementations for establishing the correspondence between each reference remaining compartment and each destination according to an ascending order of the compartment weight of each reference remaining compartment and a descending order of the destination weight of each destination, which can be determined according to actual conditions and not limited in the present disclosure.

In a possible implementation of the present disclosure, based on the compartment weight of each reference remaining compartment, the reference remaining compartment with the smallest compartment weight is selected as the first reference remaining compartment, and based on the destination weight of each destination, the destination with the largest destination weight is selected as the first destination, and a correspondence between the first reference remaining compartment and the first destination is established; based on the compartment weight of each reference remaining compartment, the reference remaining compartment with the second smallest compartment weight is selected as the second reference remaining compartment, and based on the destination weight of each destination, the destination with the second largest destination weight is selected as the second destination, and a correspondence between the second reference remaining compartment and the second destination is established, and so on, so that a correspondence between each reference remaining compartment and each destination is established.

In another possible implementation of the present disclosure, the reference remaining compartments may be arranged in a reverse order of compartment weights of the reference remaining compartments to obtain a second reverse order result; the destinations may be arranged in a positive order of destination weights of the destinations to obtain a fourth positive order result; and based on the second reverse order result and the fourth positive order result, a correspondence between each reference remaining compartment and each destination may be established.

It can be understood that in a case where there are remaining compartments having no correspondence established, reference remaining compartments whose compartment weights are greater than a fourth threshold are selected from the remaining compartments, and a correspondence between the reference remaining compartments and the destinations is established according to an ascending order of the compartment weights of the reference remaining compartments and a descending order of the destination weights of the destinations. In this way, the efficiency of subsequent order sorting through the correspondence can be improved.

As shown in FIG. 6, in some embodiments, after the correspondence between each reference remaining compartment and each destination is established, steps 601 - 604 are further included.

Step 601, in a case where there are surplus compartments and surplus destinations having no correspondence established, the number of surplus compartments is determined to obtain a first number, and the number of surplus destinations is determined to obtain a second number.

Step 602, in a case where a difference between the first number and the second number reaches a fifth threshold, a second reference hotspot compartment corresponding to each surplus destination is determined according to an ascending order of the destination weight of each surplus destination and a descending order of the compartment weight of each hotspot compartment.

Step 603, according to the position information of the second reference hot spot compartment in the sorting area and the position information of each surplus compartment in the sorting area, a surplus compartment in a neighborhood of the second reference hot spot compartment is determined as a target surplus compartment.

Step 604, a correspondence between each surplus destination and each target surplus compartment is established.

For example, the surplus compartment refers to a compartment that is other than the reference remaining compartment in the remaining compartments and has no correspondence established, that is, the surplus compartments include the compartments in the remaining compartments except the reference remaining compartments. The surplus destination refers to a destination other than that establishes a correspondence with the remaining reference compartments in the destinations. The surplus destinations include the destinations that have no correspondence established with the reference remaining compartments, in which the destinations that have no correspondence established with the reference remaining compartments may include hotspot destinations and non-hotspot destinations. The fifth threshold refers to a pre-set threshold that limits the relationship between the number of surplus compartments and the number of surplus destinations. For example, the fifth threshold may be 1.5 times. In this case, the difference between the first number and the second number reaching the fifth threshold means that the number of surplus compartments is 1.5 times the number of surplus destinations. The fifth threshold may be set by a system parameter. The second reference hotspot compartment refers to a hotspot compartment that contains the surplus compartment within the neighborhood.

In some embodiments, the first number of surplus compartments and the second number of surplus destinations may be counted by enumerating the surplus compartments to obtain the first number of surplus compartments, and enumerating the surplus destinations to obtain the second number of surplus destinations.

In some embodiments, when the difference between the first number and the second number reaches the fifth threshold, before determining the second reference hotspot compartment corresponding to each surplus destination according to the ascending order of the destination weight of each surplus destination and the descending order of the hotspot compartments, the method also includes judging whether the difference between the first number and the second number reaches the fifth threshold.

In some embodiments, in a case where the difference between the first number and the second number does not reach the fifth threshold, it is determined that the correspondence between the compartments and the destinations is established.

In some embodiments, there are many implementations for determining the second reference hotspot compartment corresponding to each surplus destination according to the ascending order of the destination weight of each surplus destination and the descending order of the hotspot compartments, which can be determined according to actual conditions and not limited in the present disclosure.

In a possible implementation of the present disclosure, the surplus destinations may be arranged in an ascending order of the destination weights of the surplus destinations to obtain a third reverse order result; the hotspot compartments may be arranged in a descending order of the compartment weights of the hotspot compartments to obtain a third positive order result; based on the third reverse order result and the third positive order result, the second reference hotspot compartment corresponding to each surplus destination may be determined.

In another possible implementation of the present disclosure, based on the destination weights of the surplus destinations, the surplus destination with the smallest destination weight is selected from the surplus destinations as a first surplus destination; based on the compartment weights of the hotspot compartments, the hotspot compartment with the largest compartment weight is selected from the hotspot compartments as a first hotspot compartment, and the first hotspot compartment is determined as the second reference hotspot compartment for the first surplus destination; based on the destination weights of the surplus destinations, the surplus destination with the second smallest destination weight is selected from the surplus destinations as a second surplus destination; based on the compartment weights of the hotspot compartments, the hotspot compartment with the second largest compartment weight is selected from the hotspot compartments as a second hotspot compartment, and the second hotspot compartment is determined as the second reference hotspot compartment for the second surplus destination, and so on, so that the second reference hotspot compartment corresponding to each surplus destination is determined.

In some embodiments, according to the position information of the second reference hotspot compartment in the sorting area and the position information of each surplus compartment in the sorting area, the target surplus compartment corresponding to the second reference hotspot compartment may be determined from the neighborhood of the second reference hotspot compartment as follows. The surplus compartments in the neighborhood of the second reference hotspot compartment are determined according to the position information of the second reference hotspot compartment in the sorting area and the position information of each surplus compartment in the sorting area, and the target surplus compartment corresponding to the second reference hotspot compartment is selected from the non-hotspot compartments.

It can be understood that, when there are surplus compartments and surplus destinations having no correspondence established, the first number of surplus compartments and the second number of surplus destinations are counted; when the difference between the first number and the second number reaches the fifth threshold, the second reference hotspot compartment corresponding to each surplus destination is determined according to the ascending order of the destination weight of each surplus destination and the descending order of each hotspot compartment; based on the second reference hotspot compartment, the target surplus compartment corresponding to the second reference hotspot compartment is determined; the correspondence between each surplus destination and each target surplus compartment is established, so that the surplus destination establishes a correspondence with the target surplus compartment, thereby improving the efficiency of subsequent order sorting based on the correspondence.

As shown in FIG. 7A, in some embodiments, after the correspondence between each surplus destination and each target surplus compartment is established, steps 701 and 702 are further included.

Step 701, in a case where there are specific compartments having no correspondence established, a difference degree of at least one hotspot destination is determined according to the number of orders for each hotspot destination.

Step 702, a correspondence between each specific compartment and each hotspot destination is established according to the difference degree of the at least one hotspot destination.

In some embodiments, the specific compartment includes a surplus compartment in having no correspondence established with the surplus destination. The difference degree indicates a difference between the number of orders for the at least one hotspot destination and the number of orders for non-hotspot destinations. For example, the difference degree may be that the number of orders for a hotspot destination exceeds 40% of the total number of orders, and/or the number of orders for two hotspot destinations exceeds 50% of the total number of orders, and/or the number of orders for three hotspot destinations exceeds 55% of the total number of orders, etc.

In some embodiments, the specific compartments are matched with hotspot destinations according to the difference degrees of the hotspot destinations, and a correspondence between each specific compartment and each hotspot destination is established according to the matching result.

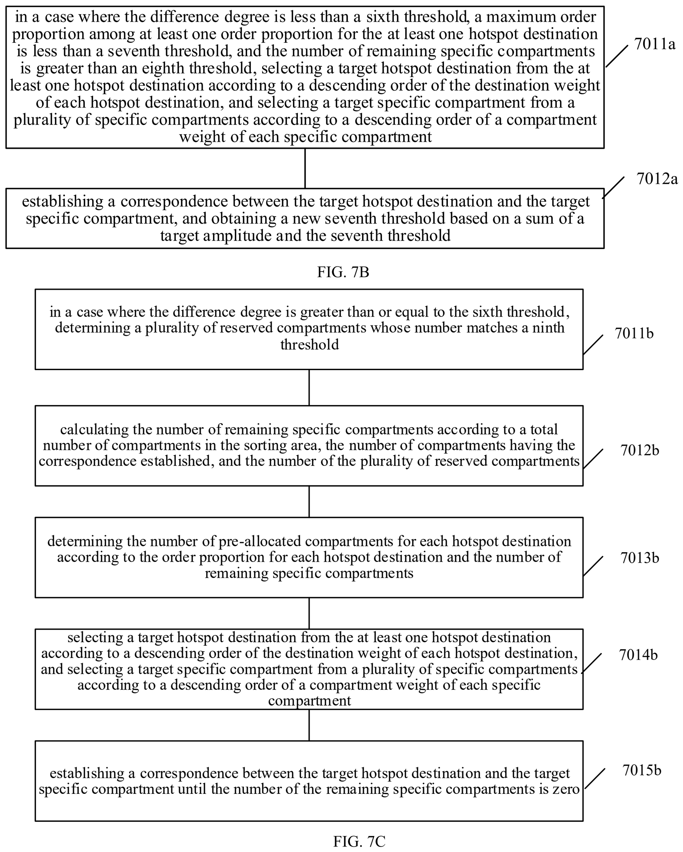

As shown in FIG. 7B, in some embodiments, the correspondence between each specific compartment and each hotspot destination is established based on the difference degree of the at least one hotspot destination, steps 7011a to 7012a are further included.

Step 7011a, in a case where the difference degree is less than a sixth threshold, a maximum order proportion among one or more order proportions for the at least one hotspot destination is less than a seventh threshold and the number of remaining specific compartments is greater than an eighth threshold, a target hotspot destination is selected from the at least one hotspot destination according to a descending order of the destination weight of each hotspot destination, and the target specific compartment is selected from the specific compartments according to a descending order of the compartment weight of each specific compartment.

Step 7012a, a correspondence between the target hotspot destination and the target specific compartment is established, and a new seventh threshold is obtained based on a sum of a target amplitude and the seventh threshold.

In some embodiments, the sixth threshold refers to a threshold for limiting the difference degree of the at least one hotspot destination, in which the difference degree of a hotspot destination may refer to a proportion of the number of orders for hotspot destination in the total number of orders, such as: the orders for the at least one hotspot destination accounts for 45% of the total orders, and the sixth threshold is 40%, then it is determined that the difference degree of the at least one hotspot destination is less than the sixth threshold. The specific compartment refers to a remaining compartment having no correspondence established in the remaining compartments, for example, a compartment other than the reference remaining compartment and the surplus compartment in the remaining compartments. The seventh threshold is a pre-set threshold for limiting the number of times a correspondence is established, and an initial value of the seventh threshold is 0, which is increased according to a preset amplitude. The target amplitude represents the average order proportion for the at least one hotspot destination, and the target amplitude is determined based on the number of hotspot destinations and the proportion of the number of orders for each hotspot destination in the total number of orders, for example, the target amplitude is equal to [max(p_i)-min(p_i)]/number of hotspot destinations. The eighth threshold is determined based on the number of hotspot destinations, for example, it can be one half of the number of hotspot destinations.

In some embodiments, an implementation for determining the difference degree of the at least one hotspot destination based on the number of orders for each hotspot destination may be to determine the proportion of the number of orders for each hotspot destination in the total number of orders based on the number of orders for each hotspot destination, and determine the difference degree of each hotspot destination based on the proportion.

In some embodiments, an implementation of selecting target hotspot destination from the at least one hotspot destination according to the descending order of destination weight, and selecting the target specific compartment from the specific compartments according to the descending order of the compartment weight may be to select the hotspot destination ranked first from the at least one hotspot destination as the target hotspot destination in the descending order of destination weight, and select the specific compartment ranked first from the specific compartments as the target specific compartment in the descending order of compartment weight.

In some embodiments, an implementation of establishing the correspondence between the target hotspot destination and the target specific compartment, and increasing the seventh threshold based on the target amplitude to obtain the new seventh threshold may be to establish the correspondence between the target hotspot destination and the target specific compartment, increase the initial value of the seventh threshold by the target amplitude to obtain the new seventh threshold.

In some embodiments, after obtaining the new seventh threshold, the process is returned to execute the steps of selecting the target hotspot destination from the at least one hotspot destination according to the descending order of destination weight, and selecting the target specific compartment from the specific compartments according to the descending order of compartment weight.

In some embodiments, the number of remaining specific compartments being greater than the eighth threshold may be that the number of specific compartments other than the target specific compartment reaches the eighth threshold, or the seventh threshold reaching the maximum order proportion among at least one order proportion for the at least one hotspot destination may be that the seventh threshold is greater than or equal to the maximum proportion of orders for the hotspot destination in the total orders.

By applying the technical solution of the embodiment of the present disclosure, when there are specific compartments having no correspondence established, the difference degree of each hotspot destination is determined. When the difference degree is less than the sixth threshold, the target specific compartment and the target hotspot destination are selected, the correspondence between the target specific compartment and the target hotspot destination is established, and the seventh threshold is increased based on the target amplitude, then the step of selecting the target specific compartment and the target hotspot destination are returned to execute until a stop condition is reached. By selecting the target specific compartment from the specific compartments having no correspondence established and establishing a correspondence between the target specific compartment and the target hotspot destination, the correspondence can be used for subsequent order sorting, thereby improving the efficiency of the order sorting.

As shown in FIG. 7C, in some embodiments, establishing the correspondence between each specific compartment and each hotspot destination based on the difference degree of each hotspot destination includes steps 7011b to 7015b.

Step 7011b, in a case where the difference degree is greater than or equal to the sixth threshold, a plurality of reserved compartments whose number matches a ninth threshold are determined.

Step 7012b, the number of remaining specific compartments is calculated according to the total number of compartments in the sorting area, the number of compartments having correspondence established, and the number of the plurality of reserved compartments.

Step 7013b, the number of pre-allocated compartments for each hotspot destination are determined based on the order proportion for each hotspot destination and the number of remaining specific compartments.

Step 7014b, a target hotspot destination is selected from the at least one hotspot destination according to a descending order of the destination weight of each hotspot destination, and a target specific compartment is selected from specific compartments according to a descending order of the compartment weight of each specific compartment.

Step 7015b, a correspondence between the target hotspot destination and the target specific compartment is established until the number of remaining specific compartments is zero.

In some embodiments, the ninth threshold is determined according to the number of hotspot destinations, for example, it may be one half of the number of hotspot destinations. That is, the ninth threshold may be the same as the eighth threshold, or may be different from the eighth threshold, which is not limited in the present disclosure.

In some embodiments, when each hotspot destination does not reach the corresponding pre-allocated number of compartments, the process is returned to the step of selecting the target hotspot destination from the at least one hotspot destination according the descending order of destination weight, and selecting the target specific compartment from the specific compartments according the descending order of compartment weight.

In some embodiments, determining the plurality of reserved compartments whose number matches the ninth threshold may be implemented by selecting a plurality of specific compartments whose number matches the ninth threshold from the specific compartments as the reserved compartments.

In some embodiments, according to the total number of compartments in the sorting area, the number of compartments having correspondence established, and the number of reserved compartments, the number of remaining specific compartments can be calculated by subtracting the number of compartments having correspondence established from the total number of compartments in the sorting area, and then subtracting the number of reserved compartments to obtain the number of remaining specific compartments. That is, the number of remaining specific compartments = the total number of compartments - the number of compartments having correspondence established - the number of reserved compartments.

In some embodiments, determining the pre-allocated number of compartments for each hotspot destination based on the order proportion for each hotspot destination and the number of remaining specific compartments may be implemented by determining the pre-allocated number of compartments for any hotspot destination based on the order proportion for any hotspot destination and the number of remaining specific compartments.

In some embodiments, determining the pre-allocated number of compartments for any hotspot destination based on the order proportion for any hotspot destination and the number of remaining specific compartments may be implemented by multiplying the order proportion for any hotspot destination by the number of remaining specific compartments and rounding the result of multiplying to obtain the pre-allocated number of compartments for any hotspot destination.

In some embodiments, the target hotspot destination is selected from the at least one hotspot destination according to the descending order of the destination weight, the target specific compartment is selected from the specific compartments according to the descending order of the compartment weight, and the correspondence between the target hotspot destination and the target specific compartment is established as follows. A correspondence between the target destination with the largest destination weight and the target specific compartment with the smallest compartment weight is established, and a correspondence between the target destination with the second largest destination weight and the target specific compartment with the second smallest compartment weight is established, and so on, each hotspot destination is traversed. After the traversal is completed, each hotspot destination is traversed until the number of target specific compartments corresponding to each hotspot destination reaches the corresponding pre-allocated number of compartments.

In some embodiments, the correspondence between compartments and destinations is established in accordance with a polling allocation principle, that is, a compartment is allocated to a destination so that the destination can establish a correspondence with the compartment, and then a corresponding compartment is allocated to the next destination.

It can be understood that when the difference degree is greater than or equal to the sixth threshold, multiple reserved compartments that match the eighth threshold are determined so that the number of specific compartments having correspondence established with each hot destination reaches the number of reserved compartments, thereby achieving establishment of the correspondence between destinations and compartments to the greatest extent possible. When order sorting is subsequently performed, sorting can be performed directly based on the correspondence, thereby improving the efficiency of subsequent order sorting.

Step 208, according to the correspondence, a sorting instruction is sent to the sorting robot to drive a sorting robot to sort each target order to a corresponding compartment based on the destination information of each target order.

For example, the sorting instruction refers to an instruction for driving the sorting robot to sort orders, and the sorting instruction may generally be in the form of natural language or in the form of codes.

In some embodiments, sending the sorting instruction to the sorting robot according to the correspondence to drive the sorting robot to sort each target order to the corresponding compartment based on the destination information of each target order may be implemented as follows. A sorting instruction containing the correspondence is generated based on the correspondence, and the sorting instruction is sent to the sorting robot, and the sorting robot sorts each target order to the corresponding compartment based on the destination information of each target order and the correspondence in the sorting instruction. Or the compartment corresponding to any target order is identified and the sorting instruction is sent to the sorting robot to drive the sorting robot to sort the target order to the corresponding compartment.

It can be understood that the multiple target orders, the destination information of each target order, and the compartment weight of each compartment in the sorting area are obtained, and the compartment weight is inversely proportional to the reference distance, which is the distance between the compartment and the sorting station; based on the destination information of each target order, the number of orders for each destination is counted to obtain the destination weight of each destination, and the destination weight is proportional to the number of orders; according to the compartment weight of each compartment and the destination weight of each destination, the correspondence between each compartment and each destination is determined; according to the correspondence, the sorting instruction is sent to the sorting robot to drive the sorting robot to sort each target order to the corresponding compartment based on the destination information of each target order. By obtaining the multiple target orders and the destination information of each target order, the destination weight of each destination is determined; based on the destination weight of each destination and the size of each destination weight, the correspondence between each compartment and each destination is obtained, so that the compartment with a high compartment weight corresponds to the destination with a high destination weight, and the compartment weight is inversely proportional to the reference distance, that is, the compartment with a short distance corresponds to a larger number of destinations, which reduces the distance that the robot travels when sorting orders and reduces path congestion and path conflict when robots are traveling.

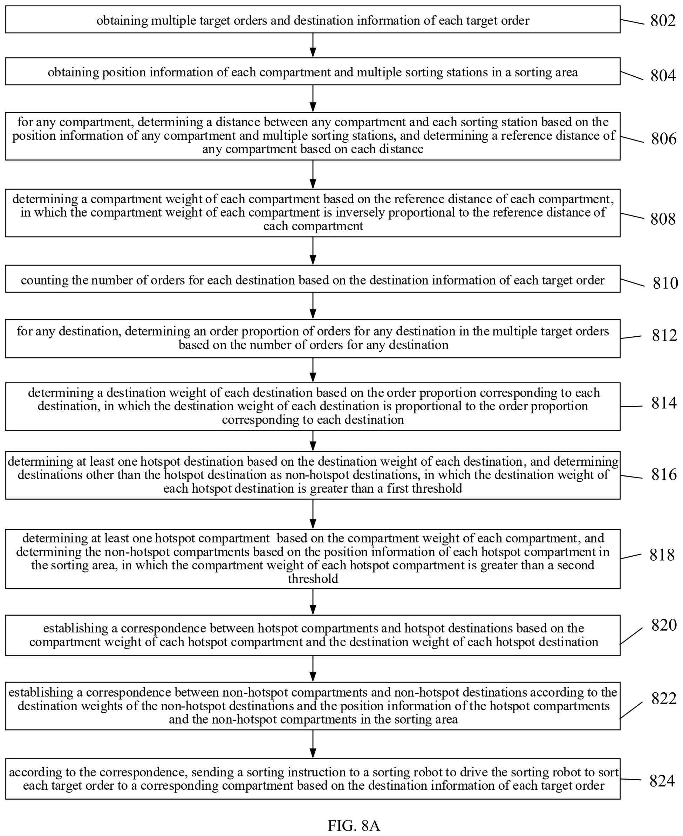

The following describes the order sorting method provided by the present disclosure by taking an application of the order sorting method provided by the present disclosure to sorting of logistics packages as an example in conjunction with FIG. 8A. FIG. 8A shows a process flowchart of an order sorting method provided by an embodiment of the present disclosure, including steps 802 to 824.

Step 802, multiple target orders and destination information of each target order are obtained.

200 logistics packages and destination information of each logistics package are obtained.

Step 804, position information of each compartment and multiple sorting stations in a sorting area is obtained.

Position coordinates of 194 sorting compartments and 20 sorting stations in a logistics sorting area are obtained.

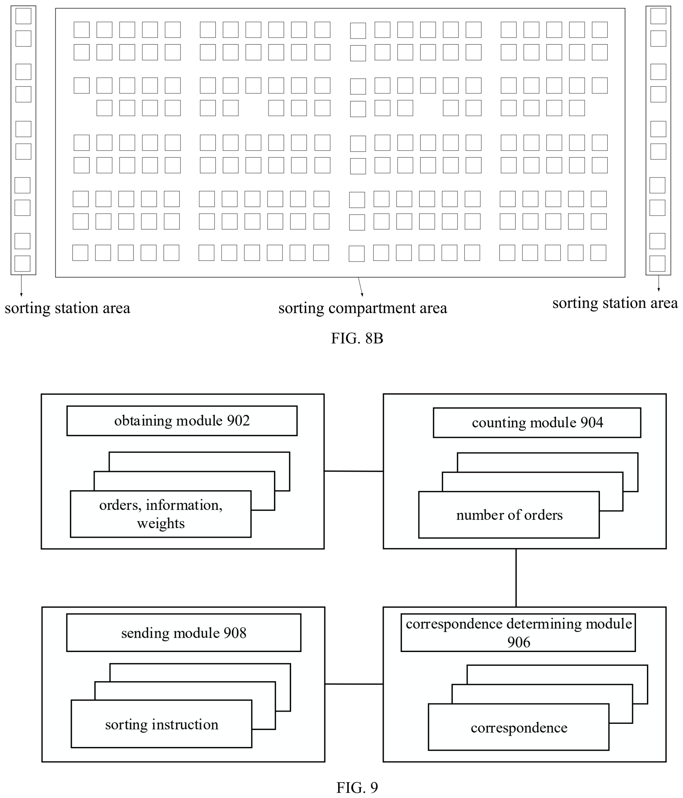

Referring to FIG. 8B, FIG. 8B shows a schematic diagram of a logistics sorting area provided by an embodiment of the present disclosure.

The schematic diagram shows sorting station areas on the left and right sides, and a sorting compartment area in the middle, in which the sorting station areas on the left and right sides each include 10 sorting stations, and the sorting compartment area in the middle includes 194 sorting compartments.

Step 806, for any compartment, a distance between any compartment and each sorting station is determined based on the position information of any compartment and multiple sorting stations, and a reference distance of any compartment is determined based on each distance.

For sorting compartment 1, distances between sorting compartment 1 and 20 sorting stations are calculated respectively, and a sum and an average are calculated to obtain a reference distance of sorting compartment 1.

The reference distance of each sorting compartment is obtained by a calculation method similar to the above steps.

Step 808, a compartment weight of each compartment is determined based on the reference distance of each compartment, in which the compartment weight of each compartment is inversely proportional to the reference distance of each compartment.

The reciprocal of the reference distance of each sorting compartment is calculated to obtain the compartment weight of each sorting compartment.

Step 810, the number of orders is counted for each destination based on the destination information of each target order.

The destination information of each logistics package is identified, the destination information of each logistics package is summarized according to the destination information to obtain the number of orders for each destination. For example, 200 logistics packages have a total of 50 different destinations. The number of orders corresponding to destination 1 is 80, the number of orders corresponding to destination 2 is 5, and so on, the number of orders corresponding to destination 50 is 15.

Step 812, for any destination, an order proportion of orders for any destination in the multiple target orders is determined based on the number of orders for any destination.

For destination 1, the number 80 of orders corresponding to destination 1 is divided by the total number 200 of orders, and the order proportion of orders for destination 1 in multiple logistics packages is determined as 80/200.

Step 814, a destination weight of each destination is determined based on the order proportion corresponding to each destination, in which the destination weight of each destination is proportional to the order proportion corresponding to each destination.

The order proportion of orders for each destination in multiple logistics packages is used as the destination weight of each destination.

Step 816, at least one hotspot destination is determined based on the destination weight of each destination, and destinations other than the hotspot destination are determined as non-hotspot destinations, in which the destination weight of each hotspot destination is greater than a first threshold.

The destination weight of each destination is compared with the first threshold, and destinations with the destination weights greater than the first threshold are determined as hotspot destinations, and destinations other than the hotspot destinations are determined as non-hotspot destinations.

Step 818, at least one hotspot compartment is determined based on the compartment weight of each compartment, and the non-hotspot compartments are determined based on the position information of each hotspot compartment in the sorting area, in which the compartment weight of each hotspot compartment is greater than a second threshold.

The compartment weight of the sorting compartment is compared with the second threshold, and the sorting compartment with the compartment weight greater than the second threshold is selected as the hotspot compartment 1. Based on the hotspot compartment 1 and the position information of the hotspot compartment 1, the compartment weight of the sorting compartment outside a neighborhood of the hotspot compartment 1 is compared with the second threshold to confirm whether it is greater than the second threshold. If yes, the sorting compartment is determined to be the hotspot compartment 2, and so on, multiple sorting compartments in the sorting area are traversed; the sorting compartments other than the hotspot compartments are determined as non-hotspot compartments.

Step 820, a correspondence between hotspot compartments and hotspot destinations is established based on the compartment weight of each hotspot compartment and the destination weight of each hotspot destination.

According to a descending order of the compartment weight of each hotspot compartment and the destination weight of each hotspot destination, the correspondence between each hotspot compartment and each hotspot destination is established in sequence.

Step 822, a correspondence between non-hotspot compartments and non-hotspot destinations is established according to the destination weights of the non-hotspot destinations and the position information of the hotspot compartments and the non-hotspot compartments in the sorting area.

Step 824, according to the correspondence, a sorting instruction is sent to a sorting robot to drive the sorting robot to sort each target order to a corresponding compartment based on the destination information of each target order.

The disclosed embodiment is applied to a sorting system, including: obtaining multiple target orders, destination information of each target order, and a compartment weight of each compartment in a sorting area, in which the compartment weight is inversely proportional to a reference distance, and the reference distance is a distance between the compartment and a sorting station; based on the destination information of each target order, counting the number of orders for each destination to obtain a destination weight of each destination, in which the destination weight is proportional to the number of orders; determining a correspondence between each compartment and each destination according to the compartment weight of each compartment and the destination weight of each destination; and sending a sorting instruction to a sorting robot according to the correspondence to drive the sorting robot to sort each target order to a corresponding compartment based on the destination information of each target order. By obtaining the multiple target orders and the destination information of each target order, the destination weight of each destination is determined; based on the destination weight of each destination and the size of each destination weight, the correspondence between each compartment and each destination is obtained, so that the compartment with a high compartment weight corresponds to the destination with a high destination weight, and the compartment weight is inversely proportional to the reference distance, that is, the compartment with a short distance corresponds to a larger number of destinations, which reduces the distance that the robot travels when sorting orders and reduces path congestion and path conflict when the robots are traveling.

Corresponding to the above method embodiments, the present disclosure also provides an embodiment of an order sorting apparatus, and FIG. 9 shows a schematic diagram of an order sorting apparatus provided by an embodiment of the present disclosure. As shown in FIG. 9, the apparatus includes an obtaining module 902, a counting module 904, a correspondence determining module 906 and a sending module 906.

The obtaining module 902 is configured to obtain a plurality of target orders, destination information of each target order, and a compartment weight of each compartment in a sorting area, in which the compartment weight is inversely proportional to a reference distance, and the reference distance is a distance between a compartment and a sorting station.

The counting module 904 is configured to count the number of orders for each destination based on the destination information of each target order to obtain a destination weight of each destination, in which the destination weight is proportional to the number of orders.

The correspondence determining module 906 is configured to determine a correspondence between each compartment and each destination according to the compartment weight of each compartment and the destination weight of each destination.

The sending module 906 is configured to send a sorting instruction to a sorting robot according to the correspondence between each compartment and each destination, to drive the sorting robot to sort goods corresponding to each target order to the corresponding compartment based on the destination information of each target order.

In some embodiments, the obtaining module 902 is configured to: obtain position information of each compartment and each sorting station in the sorting area; for any compartment, determine a distance between the any compartment and each sorting station based on the position information corresponding to the any compartment and each sorting stations, and determine a reference distance of the any compartment based on the distance between the any compartment and each sorting station; and determine the compartment weight of each compartment based on the reference distance of each compartment, in which the larger the reference distance of the compartment, the smaller the compartment weight of the compartment.

In some embodiments, the counting module 904 is configured to: count the number of orders for each destination based on the destination information of each target order; for any destination, determine an order proportion of orders for the any destination in the plurality of target orders according to the number of orders for the any destination; and determine the destination weight of each destination based on the order proportion corresponding to each destination, in which the higher the order proportion corresponding to the destination, the greater the destination weight of the destination.

In some embodiments, the correspondence determining module 906 is configured to determine at least one hotspot destination based on the destination weights of each destination, and determine destinations other than the at least one hotspot destination as non-hotspot destinations, in which a destination weight of each hotspot destination is greater than a first threshold; determine at least one hotspot compartment based on the compartment weight of each compartment, and determine non-hotspot compartments based on position information of each hotspot compartment in the sorting area, in which a compartment weight of each hotspot compartment is greater than a second threshold, and the non-hotspot compartments include compartments within a neighborhood of a hotspot compartment except the hotspot compartment; establish a correspondence between the at least one hotspot compartment and the at least one hotspot destination according to the compartment weight of each hotspot compartment and the destination weight of each hotspot destination; and establish a correspondence between the non-hotspot compartments and the non-hotspot destinations according to a destination weight of each non-hotspot destination, and position information of each hotspot compartment and each non-hotspot compartment in the sorting area, in which the correspondence between each compartment and each destination includes the correspondence between the non-hotspot compartments and the non-hotspot destinations and the correspondence between the at least one hotspot compartment and the at least one hotspot destination.

In some embodiments, the correspondence determining module 906 is configured to establishing the correspondence between each hotspot compartment and each hotspot destination in sequence according to a descending order of the compartment weight of each hotspot compartment and the destination weight of each hotspot destination.

In some embodiments, the apparatus includes a compartment determining module configured to obtain the number of the at least one hotspot compartment and the number of the at least one hotspot destination; in a case where the number of the at least one hotspot compartment is less than the number of the at least one hotspot destination, calculate a difference between the number of the at least one hotspot compartment and the number of the at least one hotspot destination; and select a plurality of target non-hotspot compartments whose number matches the difference from the non-hotspot compartments according to the compartment weight of each hotspot compartment, and determine the plurality of target non-hotspot compartments as hotspot compartments.

In some embodiments, the compartment determining module is configured to select the plurality of target hotspot compartments whose number matches the difference from the at least one hotspot compartment according to an ascending order of the compartment weight of the at least one hotspot compartment; and select non-hotspot compartments whose compartment weights are greater than or equal to a third threshold from a neighborhood of each target hotspot compartment as the plurality of target non-hotspot compartments.

In some embodiments, the correspondence determining module 906 is configured to determine a first reference hotspot compartment corresponding to each non-hotspot destination according to an ascending order of the destination weight of each non-hotspot destination and a descending order of the compartment weight of each hotspot compartment; determine a non-hotspot compartment in a neighborhood of the first reference hotspot compartment as a target non-hotspot compartment; and establish the correspondence between each non-hotspot destination and each target non-hotspot compartment.

In some embodiments, the apparatus includes a first correspondence establishing module configured to in a case where a remaining compartment having no correspondence established exists, select reference remaining compartments whose number matches a preset number from a plurality of remaining compartments based on compartment weights of the plurality of remaining compartments; and establish a correspondence between each reference remaining compartment and each destination according to an ascending order of the compartment weight of each reference remaining compartment and a descending order of the destination weight of each destination.

In some embodiments, the first correspondence establishing module is configured to determine a fourth threshold based on the compartment weights of the plurality of remaining compartments and the number of the plurality of remaining compartments; and determine the preset number of remaining compartments whose compartment weights are greater than the fourth threshold among the plurality of remaining compartments as the reference remaining compartments.

In some embodiments, the apparatus includes a second correspondence establishing module configured to in the case where there are surplus compartments and surplus destinations that have no correspondence established, determine the number of the surplus compartments to obtain a first number, and determine the number of the surplus destinations to obtain a second number, in which the surplus compartments include compartments among the plurality of remaining compartments except the reference remaining compartments, the surplus destinations include destinations among the destinations that have no correspondence established with the reference remaining compartments; in a case where a difference between the first number and the second number reaches a fifth threshold, determine a second reference hotspot compartment corresponding to each surplus destination according to an ascending order of destination weights of the surplus destinations and a descending order of the compartment weight of the at least one hotspot compartment; determine surplus compartments in a neighborhood of the second reference hotspot compartment as target surplus compartments according to position information of the second reference hotspot compartment in the sorting area and position information of each surplus compartment in the sorting area; and establish a correspondence between each surplus destination and each target surplus compartment.

In some embodiments, the apparatus includes a third correspondence establishing module configured to in the case where a specific compartment having no correspondence established exists, determine a difference degree of the at least one hotspot destination according to the number of orders for each hotspot destination, in which the specific compartment includes a surplus compartment among the surplus compartments that has no correspondence established with a surplus destination; establish a correspondence between each specific compartment and each hotspot destination according to the difference degree of the at least one hotspot destination.

In some embodiments, the third correspondence establishing module is configured to: in a case where the difference degree is less than a sixth threshold, a maximum order proportion among at least one order proportion for the at least one hotspot destination is less than a seventh threshold, and the number of remaining specific compartments is greater than an eighth threshold, select a target hotspot destination from the at least one hotspot destination according to a descending order of the destination weight of each hotspot destination, and select a target specific compartment from a plurality of specific compartments according to a descending order of a compartment weight of each specific compartment; and establish a correspondence between the target hotspot destination and the target specific compartment, and obtain a new seventh threshold based on a sum of a target amplitude and the seventh threshold, in which the target amplitude represents an average order proportion for the at least one hotspot destination.

In some embodiments, the third correspondence establishing module is configured to: in a case where the difference degree is greater than or equal to the sixth threshold, determine a plurality of reserved compartments whose number matches a ninth threshold; calculate the number of remaining specific compartments according to the total number of compartments in the sorting area, the number of compartments having the correspondence established, and the number of a plurality of reserved compartments; determine the number of pre-allocated compartments for each hotspot destination according to the order proportion for each hotspot destination and the number of remaining specific compartments; select a target hotspot destination from the at least one hotspot destination according to a descending order of the destination weight of each hotspot destination, and select a target specific compartment from a plurality of specific compartments according to a descending order of a compartment weight of each specific compartment; and establish a correspondence between the target hotspot destination and the target specific compartment until the number of the remaining specific compartments is zero.

The order sorting method provided by the embodiment of the present disclosure is applied to a sorting system. By obtaining the multiple target orders and the destination information of each target order, the destination weight of each destination is determined; based on the destination weight of each destination and the size of each destination weight, the correspondence between each compartment and each destination is obtained, so that the compartment with a high compartment weight corresponds to the destination with a high destination weight, and the compartment weight is inversely proportional to the reference distance, that is, the compartment with a short distance corresponds to a larger number of destinations, which reduces the distance that the robot travels when sorting orders and reduces path congestion and path conflict when robots are traveling.

The above is a schematic scheme of an order sorting apparatus of the present embodiment. It should be noted that the technical solution of the order sorting apparatus and the technical solution of the order sorting method described above belong to the same concept. For details not described in detail in the technical solution of the order sorting apparatus, reference may be made to the description of the technical solution of the order sorting method described above. In addition, each component in the apparatus embodiment should be understood as a functional module that must be established to implement each step of the program flow or each step of the method, and each functional module is not an actual functional division or separation definition. The apparatus claim defined by such a group of functional modules should be understood as a functional module architecture that mainly implements the solution through the computer program recorded in the specification, and should not be understood as a physical apparatus that mainly implements the solution through hardware.

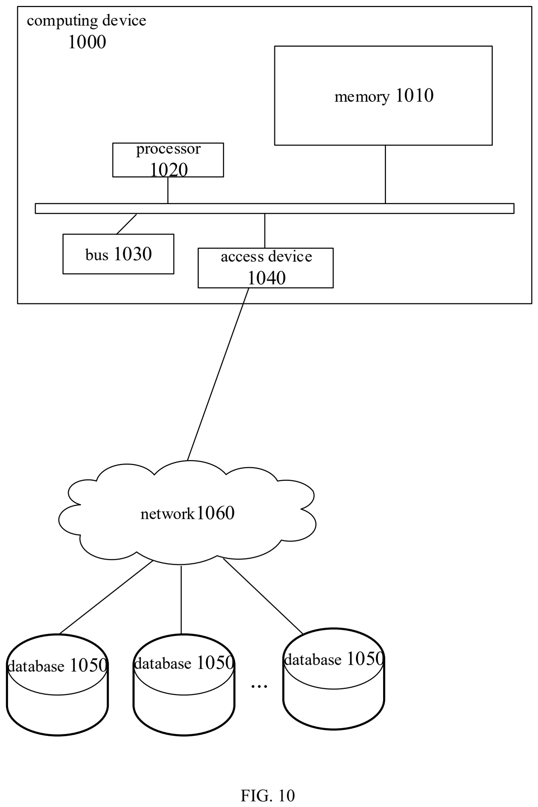

FIG. 10 is a block diagram of a computing device provided according to an embodiment of the present disclosure. The computing device includes a memory 1010 and a processor 1020. The processor 1020 is connected to the memory 1010 via a bus 1030, and a database 1050 is used to store data.

The computing device 1000 further includes an access device 1040 that enables the computing device 1000 to communicate via one or more networks 1060. Examples of these networks include a public switched telephone network (PSTN), a local area network (LAN), a wide area network (WAN), a personal area network (PAN), or a combination of communication networks such as the Internet. The access device 1140 may include one or more of any type of wired or wireless network interfaces (e.g., a network interface controller (NIC)), such as an IEEE 802.12 wireless local area network (WLAN) wireless interface, a world interoperability for microwave access (Wi-MAX) interface, an Ethernet interface, a universal serial bus (USB) interface, a cellular network interface, a Bluetooth interface, a near field communication (NFC) interface, and the like.

In some embodiments, the above components of the computing device 1000 and other components not shown in FIG. 10 may also be connected to each other, for example, via the bus. It should be understood that the block diagram of the computing device shown in FIG. 10 is only for illustrative purposes and is not intended to limit the scope of the present disclosure. Those skilled in the art may add or replace other components as needed.

The computing device 1000 may be any type of stationary or mobile computing devices, including a mobile computer or mobile computing device (e.g., tablet computer, personal digital assistant, laptop computer, notebook computer, netbook, etc.), a mobile phone (e.g., smart phone), a wearable computing device (e.g., smart watch, smart glasses, etc.), or other types of mobile devices, or a stationary computing device such as a desktop computer or PC. The computing device 1000 may also be a mobile or stationary server.

The processor 1020 is used to execute the computer-executable instructions of the order sorting method.

A schematic solution of a computing device of the embodiment is described above. It should be noted that the technical solution of the computing device and the technical solution of the above-mentioned order sorting method belong to the same concept. For details not described in detail in the technical solution of the computing device, reference may be made to the description of the technical solution of the above-mentioned order sorting method.

The embodiments of the present disclosure further provide a computer-readable storage medium storing computer instructions. When the computer instructions are executed by a processor, the steps of the above-mentioned order sorting method are implemented.

Specific embodiments of the present disclosure are described above, while other embodiments are within the scope of the appended claims. In some cases, the actions or steps recorded in the claims may be performed in a sequence different from that in the embodiments and still achieve the desired results. In addition, the processes depicted in the accompanying drawings do not necessarily require the specific sequence or continuous sequence shown to achieve the desired results. In some embodiments, multitasking and parallel processing are also possible or may be advantageous.

The computer instructions include computer program codes, which may be in the form of source codes, object codes, executable files or some intermediate forms, etc. The computer readable medium may include: any entity or apparatus capable of carrying the computer program codes, recording medium, USB flash drive, mobile hard disk, magnetic disk, optical disk, computer memory, read-only memory (ROM), random access memory (RAM), electric carrier signal, telecommunication signal and software distribution medium, etc.

It should be noted that, for the convenience of description, the aforementioned method embodiments are all described as a combination of a series of actions, but those skilled in the art should be aware that the present disclosure is not limited by the sequence of the actions described, because according to the present disclosure, certain steps can be performed in other sequences or simultaneously. Further, those skilled in the art should also be aware that the embodiments described in the disclosure are all preferred embodiments, and the actions and modules involved are not necessarily required by the present disclosure.

In the above embodiments, the description of each embodiment has its own emphasis. For parts that are not described in detail in some embodiments, reference can be made to the relevant descriptions of other embodiments.

The preferred embodiments of the present disclosure disclosed above are only used to help explain the present disclosure. The optional embodiments do not describe all the details in detail, nor do they limit the present disclosure to the specific implementation methods described. Obviously, many modifications and changes can be made according to the content of the present disclosure. The present disclosure selects and specifically describes these embodiments in order to better explain the principles and practical applications of the present disclosure, so that those skilled in the art can well understand and use the present disclosure.

## Claims

1. An order sorting method, performed by a sorting system, comprising:
obtaining a plurality of target orders, destination information of each target order, and a compartment weight of each compartment in a sorting area, wherein the compartment weight is inversely proportional to a reference distance, and the reference distance is a distance between a compartment and a sorting station;
counting the number of orders for each destination based on the destination information of each target order to obtain a destination weight of each destination, wherein the destination weight is proportional to the number of orders;
determining a correspondence between each compartment and each destination according to the compartment weight of each compartment and the destination weight of each destination; and
sending a sorting instruction to a sorting robot according to the correspondence between each compartment and each destination, to drive the sorting robot to sort goods corresponding to each target order to the corresponding compartment based on the destination information of each target order.

2. The method of claim 1, wherein obtaining the compartment weight of each compartment in the sorting area comprises:
obtaining position information of each compartment and each sorting station in the sorting area;
for any compartment, determining a distance between the any compartment and each sorting station based on the position information corresponding to the any compartment and each sorting station, and determining a reference distance of the any compartment based on the distance between the any compartment and each sorting station; and
determining the compartment weight of each compartment based on the reference distance of each compartment, wherein the larger the reference distance of the compartment, the smaller the compartment weight of the compartment.

3. The method of claim 1, wherein counting the number of orders for each destination based on the destination information of each target order to obtain the destination weight of each destination comprises:
counting the number of orders for each destination based on the destination information of each target order;
for any destination, determining an order proportion of orders for the any destination in the plurality of target orders according to the number of orders for the any destination; and
determining the destination weight of each destination based on the order proportion corresponding to each destination, wherein the higher the order proportion corresponding to the destination, the greater the destination weight of the destination.

4. The method of any of claims 1-3, wherein determining the correspondence between each compartment and each destination according to the compartment weight of each compartment and the destination weight of each destination comprises:
determining at least one hotspot destination based on the destination weight of each destination, and determining destinations other than the at least one hotspot destination as non-hotspot destinations, wherein a destination weight of each hotspot destination is greater than a first threshold;
determining at least one hotspot compartment based on the compartment weight of each compartment, and determining non-hotspot compartments based on position information of each hotspot compartment in the sorting area, wherein a compartment weight of each hotspot compartment is greater than a second threshold, and the non-hotspot compartments comprise compartments within a neighborhood of a hotspot compartment except the hotspot compartment;
establishing a correspondence between the at least one hotspot compartment and the at least one hotspot destination according to the compartment weight of each hotspot compartment and the destination weight of each hotspot destination; and
establishing a correspondence between the non-hotspot compartments and the non-hotspot destinations according to a destination weight of each non-hotspot destination, and position information of each hotspot compartment and each non-hotspot compartment in the sorting area, wherein the correspondence between each compartment and each destination comprises the correspondence between the non-hotspot compartments and the non-hotspot destinations and the correspondence between the at least one hotspot compartment and the at least one hotspot destination.

5. The method of claim 4, wherein establishing the correspondence between the at least one hotspot compartment and the at least one hotspot destination according to the compartment weight of each hotspot compartment and the destination weight of each hotspot destination comprises:
establishing the correspondence between each hotspot compartment and each hotspot destination in sequence according to a descending order of the compartment weight of each hotspot compartment and the destination weight of each hotspot destination.

6. The method of any of claims 4-5, wherein before establishing the correspondence between the at least one hotspot compartment and the at least one hotspot destination according to the compartment weight of each hotspot compartment and the destination weight of each hotspot destination, the method further comprises:
obtaining the number of the at least one hotspot compartment and the number of the at least one hotspot destination;
in a case where the number of the at least one hotspot compartment is less than the number of the at least one hotspot destination, calculating a difference between the number of the at least one hotspot compartment and the number of the at least one hotspot destination; and
selecting a plurality of target non-hotspot compartments whose number matches the difference from the non-hotspot compartments according to the compartment weight of each hotspot compartment, and determining the plurality of target non-hotspot compartments as hotspot compartments.

7. The method of claim 6, wherein selecting the plurality of target non-hotspot compartments whose number matches the difference from the non-hotspot compartments comprises:
selecting the plurality of target hotspot compartments whose number matches the difference from the at least one hotspot compartment according to an ascending order of the compartment weight of the at least one hotspot compartment; and
selecting non-hotspot compartments whose compartment weights are greater than or equal to a third threshold from a neighborhood of each target hotspot compartment as the plurality of target non-hotspot compartments.

8. The method of claim 4, wherein establishing the correspondence between the non-hotspot compartments and the non-hotspot destinations according to the destination weight of each non-hotspot destination, and the position information of each hotspot compartment and each non-hotspot compartment in the sorting area comprises:
determining a first reference hotspot compartment corresponding to each non-hotspot destination according to an ascending order of the destination weight of each non-hotspot destination and a descending order of the compartment weight of each hotspot compartment;
determining a non-hotspot compartment in a neighborhood of the first reference hotspot compartment as a target non-hotspot compartment; and
establishing the correspondence between each non-hotspot destination and each target non-hotspot compartment.

9. The method of claim 4, wherein after establishing the correspondence between the at least one hotspot compartment and the at least one hotspot destination and the correspondence between the non-hotspot compartments and the non-hotspot destinations, the method further comprises:
in a case of presence of a remaining compartment having no correspondence established, selecting reference remaining compartments whose number matches a preset number from a plurality of remaining compartments based on compartment weights of the plurality of remaining compartments; and
establishing a correspondence between each reference remaining compartment and each destination according to an ascending order of the compartment weight of each reference remaining compartment and a descending order of the destination weight of each destination.

10. The method of claim 9, wherein selecting the reference remaining compartments whose number matches the preset number from the plurality of remaining compartments based on the compartment weights of the plurality of remaining compartments comprises:
determining a fourth threshold based on the compartment weights of the plurality of remaining compartments and the number of the plurality of remaining compartments; and
determining the preset number of remaining compartments whose compartment weights are greater than the fourth threshold among the plurality of remaining compartments as the reference remaining compartments.

11. The method of claim 9, wherein after establishing the correspondence between each reference remaining compartment and each destination, the method further comprises:
in a case of presence of surplus compartments and surplus destinations having no correspondence established, determining the number of the surplus compartments to obtain a first number, and determining the number of the surplus destinations to obtain a second number, wherein the surplus compartments comprise compartments among the plurality of remaining compartments except the reference remaining compartments, the surplus destinations comprise destinations among the destinations having no correspondence established with the reference remaining compartments;
in a case where a difference between the first number and the second number reaches a fifth threshold, determining a second reference hotspot compartment corresponding to each surplus destination according to an ascending order of destination weights of the surplus destinations and a descending order of the compartment weight of the at least one hotspot compartment;
determining surplus compartments in a neighborhood of the second reference hotspot compartment as target surplus compartments according to position information of the second reference hotspot compartment in the sorting area and position information of each surplus compartment in the sorting area; and
establishing a correspondence between each surplus destination and each target surplus compartment.

12. The method of claim 11, wherein after establishing the correspondence between each surplus destination and each target surplus compartment, the method further comprises:
in a case of presence of a specific compartment having no correspondence established, determining a difference degree of the at least one hotspot destination according to the number of orders for each hotspot destination, wherein the specific compartment comprises a surplus compartment among the surplus compartments that has no correspondence established with a surplus destination;
establishing a correspondence between each specific compartment and each hotspot destination according to the difference degree of the at least one hotspot destination.

13. The method of claim 12, wherein establishing the correspondence between each specific compartment and each hotspot destination according to the difference degree of the at least one hotspot destination comprises:
in a case where the difference degree is less than a sixth threshold, a maximum order proportion among at least one order proportion for the at least one hotspot destination is less than a seventh threshold, and the number of remaining specific compartments is greater than an eighth threshold, selecting a target hotspot destination from the at least one hotspot destination according to a descending order of the destination weight of each hotspot destination, and selecting a target specific compartment from a plurality of specific compartments according to a descending order of a compartment weight of each specific compartment; and
establishing a correspondence between the target hotspot destination and the target specific compartment, and obtaining a new seventh threshold based on a sum of a target amplitude and the seventh threshold, wherein the target amplitude represents an average of the at least one order proportion for the at least one hotspot destination.

14. The method of claim 12, wherein establishing the correspondence between each specific compartment and each hotspot destination according to the difference degree of the at least one hotspot destination comprises:
in a case where the difference degree is greater than or equal to the sixth threshold, determining a plurality of reserved compartments whose number matches a ninth threshold;
calculating the number of remaining specific compartments according to a total number of compartments in the sorting area, the number of compartments having the correspondence established, and the number of the plurality of reserved compartments;
determining the number of pre-allocated compartments for each hotspot destination according to the order proportion for each hotspot destination and the number of remaining specific compartments;
selecting a target hotspot destination from the at least one hotspot destination according to a descending order of the destination weight of each hotspot destination, and selecting a target specific compartment from a plurality of specific compartments according to a descending order of a compartment weight of each specific compartment; and
establishing a correspondence between the target hotspot destination and the target specific compartment until the number of the remaining specific compartments is zero.

15. An order sorting apparatus, applied in a sorting system, comprising:
an obtaining module, configured to obtain a plurality of target orders, destination information of each target order, and a compartment weight of each compartment in a sorting area, wherein the compartment weight is inversely proportional to a reference distance, and the reference distance is a distance between a compartment and a sorting station;
a counting module, configured to count the number of orders for each destination based on the destination information of each target order to obtain a destination weight of each destination, wherein the destination weight is proportional to the number of orders;
a correspondence determining module, configured to determine a correspondence between each compartment and each destination according to the compartment weight of each compartment and the destination weight of each destination; and
a sending module, configured to send a sorting instruction to a sorting robot according to the correspondence between each compartment and each destination, to drive the sorting robot to sort goods corresponding to each target order to the corresponding compartment based on the destination information of each target order.

16. A computing device, comprising:
a memory and a processor;
wherein the memory is configured to store computer-readable instructions, and the processor is configured to execute the computer-readable instructions to perform the order sorting method of any one of claims 1 to 14.

17. A computer-readable storage medium for storing computer instructions, wherein when the computer instructions are executed by a processor, the order sorting method of any one of claims 1 to 14 is implemented.
